(19) Europäisches Patentamt
European Patent Office
Office européen des brevets

(11) EP 4 227 857 A1

(12) EUROPEAN PATENT APPLICATION
published in accordance with Art. 153(4) EPC

(43) Date of publication:
16.08.2023 Bulletin 2023/33

(21) Application number: 20961841.2

(22) Date of filing: 17.11.2020

(51) International Patent Classification (IPC):
G06N 3/08 (2023.01)

(52) Cooperative Patent Classification (CPC):
G06N 3/08

(86) International application number:
PCT/CN2020/129478

(87) International publication number:
WO 2022/104550 (27.05.2022 Gazette 2022/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Shenzhen, Guangdong 518129 (CN)

(72) Inventors:
• YAN, Wen
Shenzhen, Guangdong 518129 (CN)
• YU, Yijun
Shenzhen, Guangdong 518129 (CN)
• QIN, Dongrun
Shenzhen, Guangdong 518129 (CN)
• XIN, Yang
Shenzhen, Guangdong 518129 (CN)

(74) Representative: Pfenning, Meinig & Partner mbB
Patent- und Rechtsanwälte
Theresienhöhe 11a
80339 München (DE)

(54) MODEL DISTILLATION TRAINING METHOD AND RELATED APPARATUS, DEVICE, AND READABLE STORAGE MEDIUM

(57) A model distillation training method is disclosed, and includes: Before performing distillation training on a neural network model, a first device needs to establish a distillation training communication connection to a second device. Based on exchange of distillation training information between the first device and the second device, the second device configures a first reference neural network model by using first configuration information sent by the first device. After configuring the first reference neural network model, the second device performs operation processing on first sample data in first data information based on the configured first reference neural network model by using the first data information, to obtain first indication information, and sends the first indication information to the first device. The first device trains, by using the first indication information, a first neural network model designed by the first device. In this manner, the second device indicates, by transferring "knowledge", the first device to perform distillation training.

FIG. 4

## Description

## TECHNICAL FIELD

This application relates to the field of model distillation training technologies, and in particular, to a model distillation training method, a related apparatus and device, and a readable storage medium.

## BACKGROUND

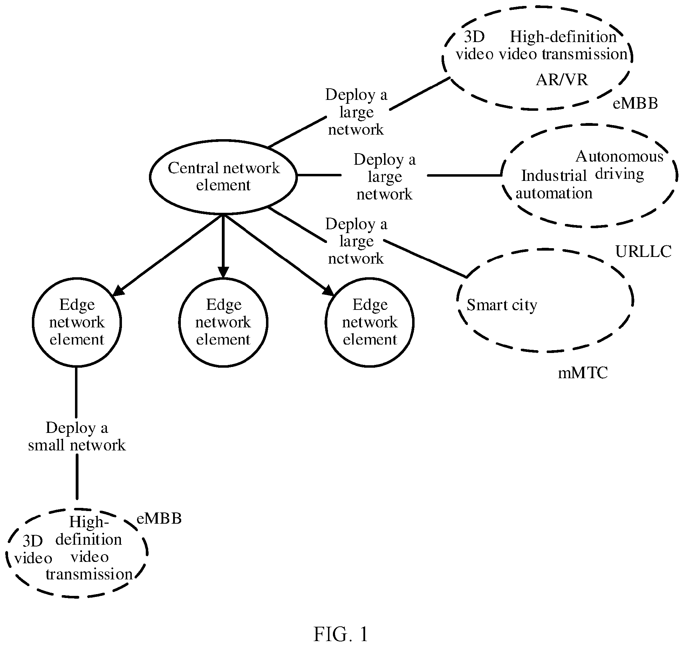

In an information technology, a central network element and an edge network element are common application scenarios in a network. For example, in a wireless scenario, a radio access network (Radio Access Network, RAN) may be used as the central network element, and user equipment (User Equipment, UE) may be used as the edge network element. Similarly, in 3GPP, a standardized network data analytics function (Network Data Analytics Function, NWDAF) is introduced, and there is also a scenario in which a central NWDAF and an edge NWDAF are deployed. The central network element may send a trained neural network model to the edge network element. FIG. 1 is a schematic diagram of deploying a neural network by a central network element and an edge network element. As shown in FIG. 1, because the central network element has a powerful computing capability and stores a large quantity of data resources, the central network element usually deploys a large neural network (large network) for a scenario of all categories, and trains the neural network. A storage resource and a computing resource of the edge network element are limited, and the edge network element is usually interested in only several specific categories. Therefore, the edge network element usually deploys a small neural network (small network).

Currently, the edge network element deploys a neural network mainly in two manners: In one manner, the central network element directly delivers the large network to the edge network element, and the edge network element deploys the large network. Because the storage resource and the computing resource of the edge network element are limited, deploying the neural network by the edge network element in this manner occupies the limited storage resource of the edge network element. In the other manner, the central network element performs network model distillation to obtain a same small network, and delivers the small network to the edge network element, and the edge network element deploys the small network. Because the central network element does not know a storage resource and a computing capability of each edge network element, and a category in which the edge network element is interested, a small network model that adapts to each edge network element cannot be obtained through distillation. A problem caused by a case in which the same small network model obtained through distillation training by the central network element does not adapt to the edge network element is as follows: The small network model supports all categories, but the edge network element is interested in only several specific categories. When a computing capability and a storage resource required by the small network model of all categories exceed a capability of the edge network element, the small network model occupies storage space and running space of the edge network element, which affects other work of the edge network element to be completed, and reduces working performance of the edge network element. In addition, because the computing capability and the storage resource of the edge network element are limited, the edge network element may not be able to completely run the small network model of all categories. Consequently, when the small network model performs functions such as portrait identification and traffic identification, completion and precision are low.

## SUMMARY

This application provides a model distillation training method, so as to resolve a problem that a large network that is deployed by an edge network element and that is delivered by a central network element occupies a limited storage resource of the edge network element, and resolve a problem that a same small network that is obtained through distillation training, that is delivered by the central network element, and that is deployed by the edge network element does not adapt to the edge network element.

According to a first aspect, an embodiment of this application provides a model distillation training method, including:

If a second device supports distillation training performed by a first device on a neural network model, the first device designs a first neural network model.

The first device sends first configuration information to the second device, where the first configuration information is used by the second device to configure a first reference neural network model.

The first device sends first data information to the second device, where the first data information includes first sample data used by the first reference neural network model for distillation training.

The first device receives first indication information returned by the second device, and trains the first neural network model by using the first indication information, where the first indication information is information obtained by inputting the first sample data into the first reference neural network model.

In this embodiment of this application, the first device designs the first neural network model, and sends the first configuration information and the first data information to the second device. Therefore, the first device can design and train the first neural network model in a personalized manner, so that a balance between a size of the first neural network model and precision of the first neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device. That is, a problem in a conventional technology caused by a case in which a same small neural network model obtained through distillation training by a central network element does not adapt to an edge network element can be resolved. The problem includes two technical problems. One is as follows: The small neural network model supports all categories, but the edge network element is interested in only a few specific categories. When a computing capability and a storage resource required by the small neural network model of all categories exceed a capability of the edge network element, the small neural network model occupies storage space and running space of the edge network element, and other work of the edge network element to be completed is affected, which reduces working performance of the edge network element. In addition, the other is as follows: Because a computing capability and a storage resource of the edge network element are limited, the edge network element may not be able to completely run the small neural network model of all categories. Consequently, when the small neural network model performs functions such as portrait identification and traffic identification, completion and precision are low.

In a possible implementation, before the first device designs the first neural network model, the method further includes:

The first device sends a first training request to the second device, where the first training request includes a first training type ID, and the first training type ID indicates a function type of a neural network model on which the first device is to perform distillation training.

If a second training type ID is consistent with the first training type ID, the first device receives a first response sent by the second device, where the first response includes first storage information, the first storage information indicates a size of storage space occupied by the first reference neural network model, and the second training type ID indicates a function type of a neural network model on which the second device supports distillation training.

The first device sends first query information to the second device based on the first storage information, where the first query information includes first distillation query information and first distillation capability information, the first distillation query information is used by the first device to query whether the second device supports distillation training on a neural network model and a manner of supporting distillation training on the neural network model when the second device supports distillation training performed by the first device on the neural network model, and the first distillation capability information includes one or more of a design capability of the first device for a neural network model, a distillation training capability for a neural network model, and whether distillation training data exists.

The first device receives a second response of the second device, where the second response indicates whether the second device supports distillation training performed by the first device on a neural network model, and the manner of supporting distillation training on a neural network model when the second device supports distillation training performed by the first device on a neural network model.

In this embodiment of this application, the first device sends the first training request to the second device, and the second device provides the corresponding reference neural network model to the first device based on the first training request. This helps the first device design the first neural network model. Further, a balance between a size of the first neural network model and precision of the first neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, before the first device sends the first configuration information to the second device, the method further includes:

The first device sends a first category of interest list to the second device, where the first category of interest list includes a set of categories in which the first device is interested for distillation training, the set that is of categories in which the first device is interested for distillation training and that is in the first category of interest list is a subset of a category set in a first category list, and the first category list includes a set of preset categories of the first reference neural network model.

In this embodiment of this application, the first device sends the first category of interest list to the second device. Therefore, after obtaining, based on the first data information sent by the first device, the data for distillation training, the second device filters, based on a category in the first category of interest list, data obtained by performing distillation training, to obtain the first indication information. The first indication information corresponds to the category that is in the first category of interest list, so that the first device obtains the adapted first neural network model through distillation training based on the first indication information. This further reduces communication overheads without affecting a training effect of the first neural network model, and saves network resources for separate distillation training.

In a possible implementation, the first indication information is obtained by the second device by performing calculation processing on the first sample data based on the first reference neural network model, and filtering processed first sample data based on the first category of interest list.

In this embodiment of this application, the second device filters, based on the category in the first category of interest list, the data obtained by performing distillation training, to obtain the first indication information. The first indication information corresponds to the category that is in the first category of interest list, so that the first device obtains the adapted first neural network model through distillation training based on the first indication information. This further reduces communication overheads without affecting a training effect of the first neural network model, and saves network resources for separate distillation training.

In a possible implementation, that the first device designs a first neural network model includes:
The first device sends a first network structure request to the second device, where the first network structure request is used by the first device to obtain structure information of the first reference neural network model from the second device.

The first device receives a first structure request response sent by the second device, where the first structure request response includes the structure information of the first reference neural network model.

The first device designs the first neural network model based on the structure information of the first reference neural network model.

In this embodiment of this application, after sending the first network structure request to the second device, the first device receives the first structure request response sent by the second device, and obtains the structure information of the first reference neural network model. This helps the first device design the first neural network model based on the structure information of the first reference neural network model. Therefore, a balance between a size of the first neural network model and precision of the first neural network model is implemented, and distillation training efficiency is improved, to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, after the first device sends the first data information to the second device, the method further includes:

The first device sends a first training result notification to the second device, where the first training result notification includes completion degree information of distillation training by the first device on the first neural network model and feedback information of the first neural network model on which distillation training is performed.

In this embodiment of this application, the first device sends the first training result notification to the second device. The first training result notification is used to notify the second device whether training on the first neural network model is completed and feed back the information about the trained first neural network model to the second device. The second device determines, based on the first training result notification, whether to release a communication resource for distillation training between the first device and the second device, to avoid occupying another channel resource between the first device and the second device.

According to a second aspect, an embodiment of this application provides a model distillation training method, including:
A second device receives first configuration information sent by a first device, and configures a first reference neural network model by using the first configuration information.

The second device receives first data information sent by the first device, where the first data information includes first sample data used by the first reference neural network model for distillation training.

The second device sends first indication information to the first device, where the first indication information is used by the first device to train a first neural network model, and the first indication information is information obtained by inputting the first sample data into the first reference neural network model.

In this embodiment of this application, the second device receives the first configuration information and the first data information that are sent by the first device. This helps the second device obtain the first indication information based on the first configuration information and the first data information that are sent by the first device, so that the first device trains the first neural network model by using the first indication information. Therefore, a balance between a size of the first neural network model and precision of the first neural network model is implemented, and distillation training efficiency is improved, to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, before the second device receives the first configuration information sent by the first device, and configures the first reference neural network model by using the first configuration information, the method further includes:

The second device receives a first training request sent by the first device, where the first training request includes a first training type ID, and the first training type ID indicates a function type of a neural network model on which the first device is to perform distillation training.

If a second training type ID is consistent with the first training type ID, the second device generates a first response based on the first training request, and sends the first response to the first device, where the second training type ID indicates a function type of a neural network model on which the second device supports distillation training, the first response includes first storage information, and the first storage information indicates a size of storage space occupied by the first reference neural network model.

The second device receives first query information sent by the first device, where the first query information includes first distillation query information and first distillation capability information, the first distillation query information is used by the first device to query whether the second device supports distillation training on a neural network model and a manner of supporting distillation training on the neural network model when the second device supports distillation training performed by the first device on the neural network model, and the first distillation capability information includes one or more of a design capability of the first device for a neural network model, a distillation training capability for a neural network model, and whether distillation training data exists.

The second device generates a second response based on the first distillation query information, and sends the second response to the first device, where the second response indicates whether the second device supports distillation training performed by the first device on a neural network model and the manner of supporting distillation training on a neural network model when the second device supports distillation training performed by the first device on a neural network model.

In this embodiment of this application, the second device receives the first training request and the first query information that are sent by the first device, and sends the corresponding response to the first device, so that the first device designs the first neural network model. Further, a balance between a size of the first neural network model and precision of the first neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, before the second device receives the first configuration information sent by the first device, the method further includes:
The second device receives a first category of interest list sent by the first device, where the first category of interest list includes a set of categories in which the first device is interested for distillation training, the set that is of categories in which the first device is interested for distillation training and that is in the first category of interest list is a subset of a category set in a first category list, and the first category list includes a set of preset categories of the first reference neural network model.

In this embodiment of this application, the second device receives the first category of interest list sent by the first device, so that the second device obtains the first indication information based on the first category of interest list. The first indication information includes indication information related to the category in which the first device is interested. The first device trains the first neural network model by using the first indication information. A trained first neural network model is a neural network model that adapts to the first device. Therefore, a balance between a size of the first neural network model and precision of the first neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, the first indication information is obtained by the second device by performing calculation processing on the first sample data based on the first reference neural network model, and filtering processed first sample data based on the first category of interest list.

In this embodiment of this application, the second device sends the first indication information obtained based on the first category of interest list to the first device, so that the first device can obtain a more adaptive first neural network model based on the first indication information, to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, before the second device receives the first configuration information sent by the first device, the method further includes:
The second device receives a first network structure request sent by the first device, where the first network structure request is used by the first device to obtain structure information of the first reference neural network model from the second device.

The second device sends a first structure request response to the first device based on the first network structure request, where the first structure request response includes the structure information of the first reference neural network model.

In this embodiment of this application, the second device sends the structure information of the first reference neural network model to the first device. This helps a first devie design the first neural network model based on the structure information of the first reference neural network model. Therefore, a balance between a size of the first neural network model and precision of the first neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, after the second device receives the first data information sent by the first device, the method further includes:

The second device receives a first training result notification sent by the first device, where the first training result notification includes completion degree information of distillation training by the first device on the first neural network model and feedback information of the first neural network model on which distillation training is performed.

In this embodiment of this application, the second device receives the first result notification, so that the second device determines, based on the first training result notification, whether to release a communication resource for distillation training between the first device and the second device, to avoid occupying another channel resource between the first device and the second device.

According to a third aspect, an embodiment of this application provides a model distillation training method, including:

A third device receives registration information sent by a second device, where the registration information includes a third training type ID, a third neural network model ID, second storage information, a second category list, and training response information, the training response information indicates whether the second device supports distillation training on a neural network model and a manner of supporting distillation training on the neural network model when the second device supports distillation training on the neural network model, and the third training type ID indicates a function type of the neural network model on which the second device supports distillation training.

The third device receives a second training request sent by a first device, where the second training request includes a fourth training type ID, second distillation query information, and second distillation capability information, and the fourth training type ID indicates a function type of a neural network model on which the first device is to perform distillation training.

If the fourth training type ID is consistent with the third training type ID, the third device generates a third response based on the second training request, and sends the third response to the first device, where the third response includes the training response information, the third neural network model ID, the second storage information, and the second category list.

The third device receives a distillation notification sent by the first device, where the distillation result notification indicates whether the first device successfully matches the second device.

In this embodiment of this application, the third device receives the registration information sent by the second device and the third device receives the second training request sent by the first device, so that the third device establishes a distillation training communication connection for the first device and the second device by analyzing the registration information and the second training request, to achieve a balance between a size of a second neural network model and precision of the second neural network model, and improve distillation training efficiency.

According to a fourth aspect, an embodiment of this application provides a model distillation training method, including:

A first device sends a second training request to a third device, where the second training request includes a fourth training type ID, second distillation query information, and second distillation capability information, and the fourth training type ID indicates a function type of a neural network model on which the first device is to perform distillation training.

If the fourth training type ID is consistent with a third training type ID, the first device receives a third response sent by the third device, where the third response includes training response information, a third neural network model ID, second storage information, and a second category list, and the third training type ID indicates a function type of a neural network model on which a second device supports distillation training.

The first device sends a distillation notification to the third device, where the distillation result notification indicates whether the first device successfully matches the second device.

In this embodiment of this application, the first device sends the second training request to the third device, and the third device sends a third response to the first device based on the second training request. This helps the third device establish a distillation training communication connection for the first device and the second device, to improve distillation training efficiency.

In a possible implementation, after the first device sends the distillation notification to the third device, the method further includes:

The first device designs a second neural network model.

The first device sends second configuration information to the second device, where the second configuration information is used by the second device to configure a second reference neural network model.

The first device sends second data information to the second device, where the second data information includes second sample data used by the second reference neural network model for distillation training.

The first device receives second indication information returned by the second device, and trains the second neural network model by using the second indication information, where the second indication information is information obtained by inputting the second sample data into the second reference neural network model.

In this embodiment of this application, after the first device and the second device establish the distillation training communication connection, the first device designs the second neural network model, and the first device and the second device perform such a distillation training communication process of sending and receiving the second configuration information and the second data information. This helps the second device obtain the second indication information that adapts to the first device, so that the first device trains, by using the second indication information, the second neural network model that adapts to the first device.

In a possible implementation, before the first device sends the second configuration information to the second device, the method further includes:
The first device sends a second category of interest list to the second device, where the second category of interest list includes a set of categories in which the first device is interested for distillation training, the set that is of categories in which the first device is interested for distillation training and that is in the second category of interest list is a subset of a category set in a second category list, and the second category list includes a set of preset categories of the second reference neural network model.

In this embodiment of this application, the first device sends the second category of interest list to the second device, so that the second device obtains the second indication information based on the second category of interest list. The second indication information corresponds to the category that is in the second category of interest list. The first device trains the second neural network model by using the second indication information, to obtain a neural network model that adapts to the first device. Therefore, a balance between a size of the second neural network model and precision of the second neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, the second indication information is obtained by the second device by performing calculation processing on the second sample data based on the second reference neural network model, and filtering processed second sample data based on the second category of interest list.

In this embodiment of this application, the second device obtains the second indication information based on the second category of interest list. The second indication information corresponds to the category that is in the second category of interest list. The first device trains the second neural network model by using the second indication information, to obtain a neural network model that adapts to the first device. Therefore, a balance between a size of the second neural network model and precision of the second neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, that the first device designs a second neural network model includes:
The first device sends a second network structure request to the second device, where the second network structure request is used by the first device to obtain structure information of the second reference neural network model from the second device.

The first device receives a second structure request response sent by the second device, where the second structure request response includes the structure information of the second reference neural network model.

The first device designs the second neural network model based on the structure information of the second reference neural network model.

In this embodiment of this application, after sending the second network structure request to the second device, the first device receives the second structure request response sent by the second device, and obtains the structure information of the second reference neural network model. This helps the first device design the second neural network model based on the structure information of the first reference neural network model. Therefore, a balance between a size of the second neural network model and precision of the second neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, after the first device sends the second data information to the second device, the method further includes:
The first device sends a second training result notification to the second device, where the second training result notification includes completion degree information of distillation training by the first device on the second neural network model and feedback information of the second neural network model on which distillation training is performed.

In this embodiment of this application, the first device sends the second training result notification to the second device. The second training result notification is used to notify the second device whether training on the second neural network model is completed and feed back the information about the trained second neural network model to the second device. The second device determines, based on the second training result notification, whether to release a communication resource for distillation training between the first device and the second device, to avoid occupying another channel resource between the first device and the second device.

According to a fifth aspect, an embodiment of this application provides a model distillation training method, including:

A second device sends registration information to a third device, where the registration information includes a third training type ID, a third neural network model ID, second storage information, a second category list, and training response information, and the training response information indicates whether the second device supports distillation training on a neural network model and a manner of supporting distillation training on the neural network model when the second device supports distillation training on the neural network model.

The second device receives second configuration information sent by a first device, where the second configuration information is used by the second device to configure a second reference neural network model.

The second device receives second data information sent by the first device, where the second data information includes second sample data used by the second reference neural network model for distillation training.

The second device sends second indication information to the first device, where the second indication information is used by the first device to train a second neural network model, and the second indication information is information obtained by inputting the second sample data into the second reference neural network model.

In this embodiment of this application, the second device sends the registration information to the third device, so that the third device can quickly and effectively establish a distillation training connection between the first device and the second device, thereby improving efficiency of distillation training. The second device receives the second configuration information and the second data information that are sent by the first device. This helps the second device obtain the second indication information based on the second configuration information and the second data information, and the first device trains the second neural network model by using the second indication information. Therefore, a balance between a size of the second neural network model and precision of the second neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, before the second device receives the second configuration information sent by the first device, the method further includes:

The second device receives a second category of interest list sent by the first device, where the second category of interest list includes a set of categories in which the first device is interested for distillation training, the set that is of categories in which the first device is interested for distillation training and that is in the second category of interest list is a subset of a category set in a second category list, and the second category list includes a set of preset categories of the second reference neural network model.

In this embodiment of this application, the second device receives the second category of interest list sent by the first device, so that the second device obtains the second indication information based on the second category of interest list. The second indication information includes indication information related to the category in which the first device is interested. The first device trains the first neural network model by using the second indication information. A trained first neural network model is a neural network model that adapts to the first device. Therefore, a balance between a size of the first neural network model and precision of the second neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, the second indication information is obtained by the second device by performing calculation processing on the second sample data based on the second reference neural network model, and filtering processed second sample data based on the second category of interest list.

In this embodiment of this application, the second device sends the second indication information obtained based on the second category of interest list to the first device, so that the first device can obtain a more adaptive second neural network model based on the second indication information, to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, before the second device receives the second configuration information sent by the first device, the method further includes:
The second device receives a second network structure request sent by the first device, where the second network structure request is used by the first device to obtain structure information of the second reference neural network model from the second device.

The second device sends a second structure request response to the first device based on the second network structure request, where the second structure request response includes the structure information of the second reference neural network model.

In this embodiment of this application, the second device sends the structure information of the second reference neural network model to the first device. This helps a second device design the second neural network model based on the structure information of the second reference neural network model. Therefore, a balance between a size of the second neural network model and precision of the second neural network model is implemented, and distillation training efficiency is improved, so as to resolve a problem that the first device cannot store, due to a limited storage resource of the first device, a large network delivered by the second device, and also resolve a problem that a same small network that is obtained through distillation training, that is deployed by the first device, and that is delivered by the second device is not adapted to the first device.

In a possible implementation, after the second device receives the second data information sent by the first device, the method further includes:
The second device receives a second training result notification sent by the first device, where the second training result notification includes completion degree information of distillation training by the first device on the second neural network model and feedback information of the second neural network model on which distillation training is performed.

In this embodiment of this application, the second device receives the second result notification, so that the second device determines, based on the second training result notification, whether to release a communication resource for distillation training between the first device and the second device, to avoid occupying another channel resource between the first device and the second device.

According to a sixth aspect, an embodiment of this application provides a model distillation training apparatus, where the model distillation training apparatus is a first device, and includes:

a first neural network model design unit, configured to design a first neural network model if a second device supports distillation training performed by the first device on a neural network model;
a first configuration information sending unit, configured to send first configuration information to the second device;

a first data information sending unit, configured to send first data information to the second device;
a first indication information receiving unit, configured to receive first indication information returned by the second device; and
a first neural network model training unit, configured to train the first neural network model by using the first indication information.

In a possible implementation, the model distillation training apparatus further includes:

a first training request sending unit, configured to send a first training request to the second device before the first neural network model design unit designs the first neural network model;
a first response receiving unit, configured to: after the first training request sending unit sends the first training request to the second device, if a second training type ID is consistent with a first training type ID, receive a first response sent by the second device;
a first query information sending unit, configured to send first query information to the second device based on first storage information; and
a second response receiving unit, configured to: after the first query information sending unit sends the first query information to the second device, receive a second response of the second device.

In a possible implementation, the model distillation training apparatus further includes:
a first category of interest list sending unit, configured to: before the first configuration information sending unit sends the first configuration information to the second device, send a first category of interest list to the second device.

In a possible implementation, the first neural network model design unit further includes:

a first network structure request sending unit, configured to send a first network structure request to the second device before the first neural network model design unit designs the first neural network model; and
a first structure request response receiving unit, configured to: after the first network structure request sending unit sends the first network structure request to the second device, receive a first structure request response sent by the second device.

According to a seventh aspect, an embodiment of this application provides a model distillation training apparatus, where the model distillation training apparatus is a second device, and includes:

a first configuration information receiving unit, configured to receive first configuration information sent by a first device;
a first configuration unit, configured to configure a first reference neural network model by using the first configuration information;
a first data information receiving unit, configured to receive first data information sent by the first device; and
a first indication information sending unit, configured to send first indication information to the first device.

In a possible implementation, the model distillation training apparatus further includes:

a first training request receiving unit, configured to: before the first parameter configuration unit configures the first reference neural network model, receive a first training request sent by the first device;
a first response sending unit, configured to: if a second training type ID is consistent with a first training type ID, generate a first response based on the first training request, and send the first response to the first device;
a first query information receiving unit, configured to receive first query information sent by the first device; and
a second response sending unit, configured to: after the first query information receiving unit receives the first query information sent by the first device, send a second response to the first device.

In a possible implementation, the model distillation training apparatus further includes:
a first category of interest list receiving unit, configured to: before the first configuration information receiving unit receives the first configuration information sent by the first device, receive a first category of interest list sent by the first device.

In a possible implementation, the model distillation training apparatus further includes:

a first network structure request receiving unit, configured to: before the first configuration information receiving unit receives the first configuration information sent by the first device, receive a first network structure request sent by the first device; and
a first structure request response sending unit, configured to send a first structure request response to the first device.

According to an eighth aspect, an embodiment of this application provides a model distillation training apparatus, where the model distillation training apparatus is a third device, and includes:

a registration information receiving unit, configured to receive registration information sent by a second device;
a second training request receiving unit, configured to receive a second training request sent by a first device;
a third response sending unit, configured to: if a fourth training type ID is consistent with a third training type ID, generate a third response based on the second training request, and send the third response to the first device; and
a distillation notification receiving unit, configured to receive a distillation notification sent by the first device.

According to a ninth aspect, an embodiment of this application provides a model distillation training apparatus, where the model distillation training apparatus is a first device, and includes:

a second training request sending unit, configured to send a second training request to a third device;
a third response receiving unit, configured to: if a fourth training type ID is consistent with a third training type ID, receive a third response sent by the third device; and
a distillation notification sending unit, configured to send a distillation notification to the third device.

In a possible implementation, the model distillation training apparatus further includes:

a second neural network model design unit, configured to design a second neural network model after the distillation notification sending unit sends the distillation notification to the third device;
a second configuration information sending unit, configured to send second configuration information to a second device;
a second data information sending unit, configured to send second data information to the second device; and
a second indication information receiving unit, configured to receive second indication information returned by the second device.

In a possible implementation, the model distillation training apparatus further includes:
a second category of interest list sending unit, configured to: after the second configuration information sending unit sends the second configuration information to the second device, send a second category of interest list to the second device.

In a possible implementation, the second neural network model design unit further includes:

a second network structure request sending unit, configured to send a second network structure request to the second device; and
a second structure request response receiving unit, configured to receive a second structure request response sent by the second device.

According to a tenth aspect, an embodiment of this application provides a model distillation training apparatus, where the model distillation training apparatus is a second device, and includes:

a registration information sending unit, configured to send registration information to a third device;
a second configuration information receiving unit, configured to receive second configuration information sent by a first device;
a second data information receiving unit, configured to receive second data information sent by the first device; and
a second indication information sending unit, configured to send second indication information to the first device.

In a possible implementation, the model distillation training apparatus further includes:
a second category of interest list receiving unit, configured to: before the second configuration information receiving unit receives the second configuration information sent by the first device, receive a second category of interest list sent by the first device.

In a possible implementation, the model distillation training apparatus further includes:

a second network structure request receiving unit, configured to: before the second configuration information receiving unit receives the second configuration information sent by the first device, receive a second network structure request sent by the first device; and
a second structure request response sending unit, configured to send a second structure request response to the first device based on the second network structure request.

According to an eleventh aspect, an embodiment of this application provides a model distillation training device, including a processor and a memory.

The memory is configured to store program code, and the processor is configured to invoke the program code stored in the memory, to perform the model distillation training method according to the first aspect and the possible implementations of the first aspect.

According to a twelfth aspect, an embodiment of this application provides a model distillation training device, including a processor and a memory.

The memory is configured to store program code, and the processor is configured to invoke the program code stored in the memory, to perform the model distillation training method according to the second aspect and the possible implementations of the second aspect.

According to a thirteenth aspect, an embodiment of this application provides a model distillation training device, including a processor and a memory.

The memory is configured to store program code, and the processor is configured to invoke the program code stored in the memory, to perform the model distillation training method according to the third aspect and the possible implementations of the third aspect.

According to a fourteenth aspect, an embodiment of this application provides a model distillation training device, including a processor and a memory.

The memory is configured to store program code, and the processor is configured to invoke the program code stored in the memory, to perform the model distillation training method according to the fourth aspect and the possible implementations of the fourth aspect.

According to a fifteenth aspect, an embodiment of this application provides a model distillation training device, including a processor and a memory.

The memory is configured to store program code, and the processor is configured to invoke the program code stored in the memory, to perform the model distillation training method according to the fifth aspect and the possible implementations of the fifth aspect.

According to a sixteenth aspect, an embodiment of this application provides a computer-readable storage medium. The computer-readable storage medium stores a computer program. When the computer program is executed by a processor, a first device is enabled to implement the model distillation training method in the first aspect and the fourth aspect and the possible implementations of the first aspect and the fourth aspect, or a second device is enabled to implement the model distillation training method in the second aspect and the fifth aspect and the possible implementations of the second aspect and the fifth aspect, or a third device is enabled to implement the model distillation training method in the third aspect and the possible implementations of the third aspect.

According to a seventeenth aspect, an embodiment of this application provides a computer program. The computer program includes instructions. When the computer program is executed by a computer, a first device is enabled to perform the procedures performed by the first device in the first aspect and the fourth aspect and the possible implementations of the first aspect and the fourth aspect, or a second device is enabled to perform the procedures performed by the second device in the second aspect and the fifth aspect and the possible implementations of the second aspect and the fifth aspect, or a third device is enabled to perform the procedures performed by the third device in the third aspect and the possible implementations of the third aspect.

## BRIEF DESCRIPTION OF DRAWINGS

FIG. 1 is a schematic diagram of deploying a neural network by a central network element and an edge network element according to an embodiment of this application;
FIG. 2 is a schematic diagram of model distillation according to an embodiment of this application;
FIG. 3 is a schematic architectural diagram of a model distillation training system according to an embodiment of this application;
FIG. 4 is a schematic flowchart of model distillation training according to an embodiment of this application;
FIG. 5 is a schematic flowchart of another model distillation training according to an embodiment of this application;
FIG. 6 is a schematic flowchart of another model distillation training according to an embodiment of this application;
FIG. 7 is a schematic flowchart of another model distillation training according to an embodiment of this application;
FIG. 8 is a schematic structural diagram of a model distillation training apparatus according to an embodiment of this application;
FIG. 9 is a schematic structural diagram of another model distillation training apparatus according to an embodiment of this application;
FIG. 10 is a schematic structural diagram of another model distillation training apparatus according to an embodiment of this application;
FIG. 11 is a schematic structural diagram of another model distillation training apparatus according to an embodiment of this application;
FIG. 12 is a schematic structural diagram of another model distillation training apparatus according to an embodiment of this application;
FIG. 13 is a schematic structural diagram of another model distillation training device according to an embodiment of this application;
FIG. 14 is a schematic structural diagram of another model distillation training device according to an embodiment of this application;
FIG. 15 is a schematic structural diagram of another model distillation training device according to an embodiment of this application;
FIG. 16 is a schematic structural diagram of another model distillation training device according to an embodiment of this application; and
FIG. 17 is a schematic structural diagram of another model distillation training device according to an embodiment of this application.

## DESCRIPTION OF EMBODIMENTS

The following describes embodiments of this application with reference to the accompanying drawings in embodiments of this application.
In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.
An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.
Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).
The first device and the second device in the claims and the specification of this application are network devices or user equipment that support AI model training and neural model distillation training, and the third device is a switching device that supports an inter-device communication process and that receives device registration information.

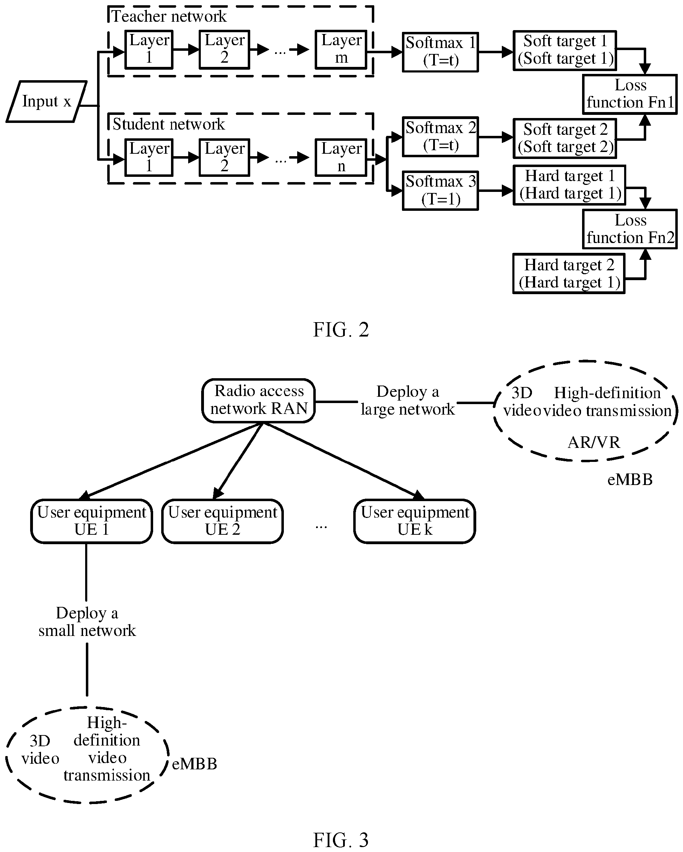

FIG. 2 is a schematic diagram of model distillation according to an embodiment of this application. As shown in FIG. 2, the schematic diagram of model distillation includes a teacher network and a student network. The teacher network is a trained neural network, has a complex network structure, usually has more nodes and layers, and has a powerful computing and processing capability and a large quantity of data resources. The student network is a to-be-trained neural network, is a small network, has a relatively simple network structure, and generally has fewer nodes and fewer layers. Same X is input into the teacher network and the student network. The teacher network performs processing and calculation on X, and processes a calculation result based on a normalized exponential function Softmax 1 function, to obtain indication information for distillation training. In this embodiment, the indication information for distillation training is soft target 1 output by the teacher network, and may also be understood as "knowledge" obtained by the teacher network by processing X. After the student network performs processing and calculation on X, and processes a calculation result based on a Softmax 2 function, the student network outputs soft target 2. The student network analyzes soft target 1 and soft target 2 through comparison, to obtain a loss function Fn1. After the student network performs processing and calculation on X, and processes a calculation result based on a Softmax 3 function, the student network outputs hard target 1. The student network analyzes hard target 1 and hard target 2 through comparison, to obtain a loss function Fn2, where hard target 2 is a preset output result of X. The loss functions Fn1 and Fn2 indicate deviation degrees between soft target 1 and soft target 2 and between hard target 1 and hard target 2. The student network adjusts the student network according to the loss functions Fn1 and Fn2, so that the loss functions Fn1 and Fn2 obtained by the student network by performing processing and calculation on X decrease to a preset value. In this way, when same X is input, an output of the student network is close to an output of the teacher network, to achieve an objective of performing distillation training on the student network via a teacher model. In this way, the teacher network cultivates a generalization capability of the student network, to transfer the "knowledge" from the teacher network to the student network. A process of neural network training of a function type on the student network via the teacher network is as follows:

The teacher network is a trained neural network, and can implement a plurality of functions such as image recognition and traffic identification. In this embodiment, an example is used in which the teacher network can implement image recognition, and model distillation is performed to enable the student network to implement an image recognition function. In this embodiment, an example in which the input X of the teacher network and the student network is a car picture is used for description. X is input into the teacher network, related algorithm processing is performed on X at each network layer in the teacher network, and a processing process is mainly comparing X with preset categories that are in the teacher network. The preset categories may be objects of different types from the input X, may be objects of a relatively large appearance shape difference from the input X, or may be objects of another category such as objects of a different attribute from the input X. In this embodiment, an example is used in which the preset categories in the teacher network are objects of different types from the input X. The preset categories in the teacher network include four categories: a vehicle, a train, an aircraft, and a ship, and the preset categories in the teacher network are denoted as $X_1$, $X_2$, $X_3$, and $X_4$ respectively. The teacher network compares the input X with the preset categories $X_1$, $X_2$, $X_3$, and $X_4$, and then outputs similarity $Y_1$ between X and $X_1$, similarity $Y_2$ between X and $X_2$, similarity $Y_3$ between X and $X_3$, and similarity $Y_4$ between X and $X_4$. Because the teacher network is a trained neural network, the teacher network determines that X and $X_1$ belong to a same category (correspondingly, a car and a vehicle belong to a same category). Therefore, the similarity between X and $X_1$ output by the teacher network is the highest, that is, a value of $Y_1$ is the highest (close to 100%), and the similarity between X and $X_2$, the similarity between X and $X_3$, and the similarity between X and $X_4$ that are output by the teacher network are very low, that is, values of $Y_2$, $Y_3$, and $Y_4$ are extremely low (close to 0%). In this case, differences between the values of $Y_1$ and $Y_2$, $Y_3$, and $Y_4$ are excessively large, and information output by the teacher network includes information of almost only $Y_1$, and almost zero information of $Y_2$, $Y_3$, and $Y_4$. Consequently, an amount of the information output by the teacher network is relatively small. In order to increase the amount of the information output by the teacher network, $Y_1$, $Y_2$, $Y_3$, and $Y_4$ are processed based on the Softmax 1 function to narrow the difference between the values of $Y_1$ and $Y_2$, $Y_3$, and $Y_4$. An expression of the Softmax 1 function is:

$$z_i = \frac{exp(Y_i \ / \ T)}{\Sigma_j \ exp(Y_j \ / \ T)}$$

$Z_i$ is output information of the teacher network obtained by processing $Y_i$ based on the Softmax 1 function. T is distillation temperature information (where a larger value of T indicates smoother distribution of the output $Z_i$, which is equivalent to a smoothing function, and has a function of retaining similar information; if T approaches infinity, even distribution is implemented), and a value of T is obtained based on a network structure difference between the teacher network and the student network.

After $Y_1$, $Y_2$, $Y_3$, and $Y_4$ are processed based on the Softmax 1 function, $Z_1$, $Z_2$, $Z_3$, and $Z_4$ are respectively output. Distribution of $Z_1$, $Z_2$, $Z_3$, and $Z_4$ is relatively smooth (where a value of $Z_4$ is the highest, and differences between values of $Z_2$, $Z_3$, and $Z_4$ and the value of $Z_1$ narrow). In a manner of processing $Y_1$, $Y_2$, $Y_3$, and $Y_4$ based on the Softmax 1 function, amounts of information of $Y_2$, $Y_3$, and $Y_4$ are increased, and further, the amount of the information output by the teacher network is increased, where $Z_1$, $Z_2$, $Z_3$, and $Z_4$ are soft target 1 output by the teacher network.

It should be noted that, the teacher network is a trained neural network, and there is a very high confidence of similarity that is output by the teacher network and that is between X and a category similar to X (in this embodiment, a car has very high similarity with a vehicle). Consequently, there are large differences between the values of $Y_1$ and $Y_2$, $Y_3$, and $Y_4$. For example, in this embodiment, for an input of the car picture, the teacher network determines that the similarity between the car picture and the vehicle category is very high, and $Y_1$ output by the teacher network may be 95%; and the teacher network determines that similarity between the car picture and the train, similarity between the car picture and the airplane, and similarity between the car picture and the ship are very low, and $Y_2$, $Y_3$, and $Y_4$ output by the teacher network may be 3%, 1%, and 1% respectively. In this case, it is difficult for the teacher network to transfer, to the student network, "knowledge" obtained through comparing X and the categories $X_1$, $X_2$, $X_3$, and $X_4$, and the reason is that X and $X_2$, $X_3$, and $X_4$ have almost zero similarity and there is very little information. Training the student network in this manner is not conducive to strengthening the generalization capability of the student network, and affects an effect of distillation training. Therefore, the teacher network processes $Y_1$, $Y_2$, $Y_3$, and $Y_4$ based on the Softmax 1 function, so that value distribution of $Y_1$, $Y_2$, $Y_3$, and $Y_4$ is smoother, and the amounts of information of $Y_2$, $Y_3$, and $Y_4$ are increased. In this way, the "knowledge" obtained through comparing X and $X_1$, $X_2$, $X_3$, and $X_4$ is processed by the teacher network, and transferred to the student network, so that the generalization capability of the student network is enhanced.

Similarly, X is input to the student network, and related algorithm processing is performed on X at each network layer in the student network, and X is compared with all preset categories that are in the student network. The student network compares the input X with the preset categories $X_1$, $X_2$, $X_3$, and $X_4$, and then outputs similarity $H_1$ between X and $X_1$, similarity $H_2$ between X and $X_2$, similarity $H_3$ between X and $X_3$, and similarity $H_4$ between X and $X_4$. Because the student network is a to-be-trained neural network, a capability of the student network to compare the input X with the preset categories is limited. Consequently, similarity between X and the preset categories that is output by the student network is greatly different from a preset result (where for example, a value of $H_4$ is extremely large, and is close to 100%; and values of $H_2$, $H_3$, and $H_1$ are extremely small, and are close to 0). Similar to the teacher network, because differences between the values of $H_4$ and $H_2$, $H_3$, and $H_1$ are excessively large, information output by the student network includes information of almost only $H_4$, and almost zero amounts of information of $H_2$, $H_3$, and $H_1$. In order to increase an amount of the information output by the student network, $H_1$, $H_2$, $H_3$, and $H_4$ are processed based on the Softmax 2 function, to narrow the difference between the values of $H_4$ and $H_2$, $H_3$, and $H_1$, to increase the amount of the information output by the student network, where distillation temperature information T is the same as that used by the teacher network. After $H_1$, $H_2$, $H_3$, and $H_4$ are processed based on the Softmax 2 function, $M_1$, $M_2$, $M_3$, and $M_4$ are respectively output. Distribution of $M_1$, $M_2$, $M_3$, and $M_4$ is relatively smooth (where a value of $M_4$ is the highest, but differences between values of $M_2$, $M_3$, and $M_1$ and the value of $M_4$ narrow), and $M_4$, $M_2$, $M_3$, and $M_4$ are soft target 2 output by the student network.

The student network compares the soft target 2 output by the student network with the soft target 1 output by the teacher network, and obtains the loss function Fn1 based on a deviation degree between the soft target 2 and the soft target 1. In addition, the student network processes, based on the Softmax 3 function, $H_1$, $H_2$, $H_3$, and $H_4$ output by the student network, to obtain $B_4$. The distillation temperature information T used in Softmax 3 is equal to 1, $B_4$ obtained by processing $H_1$, $H_2$, $H_3$, and $H_4$ based on the Softmax 3 function includes information of only $H_4$, and $B_4$ is hard target 1 output by the student network. The student network analyzes, through comparison, hard target 1 output by the student network and hard target 2, to obtain the loss function Fn2 based on a deviation degree between the hard target 1 and the hard target 2. Hard target 2 is a preset result that is to be obtained by inputting X, and a preset relationship between X and the hard target 2 is stored in the student network as local data.

The student network adjusts a neural network model of the student network based on the loss functions Fn1 and Fn2 to decrease the deviation degrees between the output information of the student network and that of the teacher network, to reduce values of the loss functions Fn1 and Fn2, thereby enhancing the generalization capability of the student network, and implementing "knowledge" transferring of the teacher network.

FIG. 3 is a schematic architectural diagram of a model distillation training system according to an embodiment of this application. FIG. 3 shows that in a wireless scenario, a second device is a radio access network (Radio Access Network, RAN), a first device is user equipment (User Equipment, UE), and the RAN accesses a plurality of pieces of user equipment. A large network deployed by the RAN is a first reference neural network model, the first reference neural network model is a model of all categories, and categories in the first reference neural network model include 3D video, high-definition video transmission, and augmented reality (Augmented Reality, AR)/virtual reality (Virtual Reality, VR). A small network deployed by UE 1 is a first neural network model, and a category in the first neural network model is a subset of categories included in the first reference neural network model, and includes 3D video and high-definition video transmission. In this embodiment, an example is used in which UE 1 performs distillation training on the first neural network model to enable the first neural network model to have a traffic identification function. Steps of performing distillation training by UE 1 on the first neural network model are as follows:

1. UE 1 sends a first training request to the RAN, where the first training request includes a first training type ID, and the first training type ID indicates that a function type of the first neural network model on which UE 1 performs distillation training is traffic identification.

2. The RAN receives the first training request, and compares the first training type ID with a second training type ID that is in the RAN. If the first training type ID is consistent with the second training type ID, the RAN supports distillation training performed by UE 1 on the first neural network model, and sends a first response to UE 1 based on the second training type ID. The first response includes first storage information, and the first storage information is a size of a memory or storage space occupied by the first reference neural network model having a traffic identification function.

3. UE 1 sends first query information to the RAN based on the first response, to query whether the RAN supports distillation training performed by UE 1 on the first neural network model to enable the first neural network model to have a traffic identification function, and UE 1 reports a distillation training capability of UE 1.

4. The RAN sends a second response to UE 1 based on the first query information, to notify UE 1 that the RAN supports distillation training performed by UE 1 on the first neural network model to enable the first neural network model to obtain the traffic identification function, and notify UE 1 of a manner, of supporting distillation training, in which the RAN sends first indication information to UE 1 to indicate UE 1 to perform distillation training on the first neural network model.

5. UE 1 designs the first neural network model.

6. UE 1 sends first configuration information to the RAN, and the RAN configures the first reference neural network model based on the first configuration information. The first configuration information includes distillation temperature information T and a knowledge type KnowledgeType. The distillation temperature information T is obtained based on the first reference neural network model deployed by the RAN and the first neural network model designed and deployed by UE 1, or may be obtained based on an experience library or in another manner. T is used to obtain, through distillation, information obtained by the first reference neural network model by analyzing, through comparison, to-be-identified traffic data and a preset traffic category that is in the first reference neural network model. The RAN configures a normalized Softmax (T) function based on the distillation temperature information T in the first configuration information, and learns, based on the knowledge type KnowledgeType, that a type of the first indication information is a soft target output by the first reference neural network model by performing traffic identification. Then, the RAN sends the first indication information to UE 1 (in this embodiment, an example is that the knowledge type KnowledgeType is the soft target Soft target output by the first reference neural network model).

7. UE 1 sends first data information to the RAN, where the first data information includes first sample data, and the first sample data is training data required by UE 1 to perform distillation training on the first neural network model for traffic identification. In addition, the first sample data includes an index Index that indicates each piece of traffic data. For example, the first sample data includes traffic data of a 3D movie, traffic data in movie transmission, and traffic data of human-machine interaction, and respective indexes Indexes are 1, 2, and 3, indicating the traffic data of the 3D movie, the traffic data in movie transmission, and the traffic data of human-machine interaction.

8. The RAN processes the first sample data based on the first reference neural network model, to obtain the first indication information, and sends the first indication information to UE 1, where the first indication information is information obtained in a process in which the first reference neural network model performs traffic identification based on the first sample data. A process in which the RAN obtains the first indication information is as follows: The RAN inputs information about the first sample data (the traffic data of the 3D movie, the traffic data in movie transmission, and the traffic data of human-machine interaction) into the first reference neural network model, and the first reference neural network model analyzes, through comparison, the traffic data of the 3D movie, the traffic data in movie transmission, and the traffic data of human-machine interaction and three preset categories: 3D video, high-definition video transmission, and AR/VR that are in the first reference neural network model, and outputs similarity A1, A2, and A3 between the traffic data of the 3D movie and traffic of the three preset categories: 3D video, high-definition video transmission, and AR/VR; similarity B1, B2, and B3 between the traffic data in movie transmission and the traffic of the four preset categories: 3D video, high-definition video transmission, and AR/VR; and similarity C1, C2, and C3 between the traffic data of human-machine interaction and the traffic of the three preset categories: 3D video, high-definition video transmission, and AR/VR. The first reference neural network model is a trained neural network model, and can accurately identify a preset category with highest similarity with the input traffic data. Therefore, in A1, A2, and A3, a value of A1 is the highest and close to 100%, and values of A2 and A3 are very small and close to 0; in B 1, B2, and B3, a value of B2 is the highest and close to 100%, and values of B1 and B3 are very small and close to 0; in C1, C2, and C3, a value of C3 the highest and close to 100%, and values of C1 and C2 are very small and close to 0. To increase an amount of information output by the first reference neural network model, and enable value distribution of similarity between traffic data in each piece of sample data information and the preset category to be more smooth, A1, A2, and A3 are used as inputs of the normalized Softmax (T) function, and a1, a2, and a3 are output, where a1, a2, and a3 are soft target 1 output by the first reference neural network model, and an index Index 1 indicates the soft target 1 (where an index Index of the soft target corresponds to an index Index of the traffic data in the information about the first sample data). Similarly, B 1 to B3 and C1 to C3 are processed by using the same method to obtain soft target 2 (b1 to b3) and soft target 3 (c1 to c3), and indexes Index 2 and Index 3 indicate the soft target 2 and the soft target 3 respectively. The soft target 1, the soft target 2, and the soft target 3 are the first indication information. Then, the RAN sends the first indication information to UE 1.

9. UE 1 receives the first indication information, and uses the first indication information to perform distillation training on the first neural network model for a traffic identification function of categories included in the first neural network model. A specific process in which UE 1 performs distillation training on the first neural network model by using the first indication information is as follows: UE 1 inputs the information about the first sample data (the traffic data of the 3D movie, the traffic data in movie transmission, and the traffic data of human-machine interaction) into the first neural network model, the first neural network model analyzes, through comparison, the traffic data of the 3D movie, the traffic data in movie transmission, and the traffic data of human-machine interaction and the two preset categories: 3D video and high-definition video transmission that are in the first neural network model, and outputs similarity D1 and D2 between the traffic data of the 3D movie and traffic of the two preset categories: 3D video and high-definition video transmission; similarity E1 and E2 between the traffic data in movie transmission and the traffic of the two preset categories: 3D video and high-definition video transmission; and similarity F1 and F2 between the traffic data of human-machine interaction and the traffic of the two preset categories: 3D video and high-definition video transmission. Because the first neural network model is a neural network model on which distillation training is to be performed, confidence of an output result of traffic identification is very low. For example, the first neural network model may consider that the traffic data of the 3D movie is highly similar to traffic data of the high-definition video transmission category, the traffic data in movie transmission is highly similar to traffic data of the 3D video category, and the traffic data of human-machine interaction is highly similar to traffic data of the high-definition video transmission category. Therefore, a value of D2 is very high and close to 100%, and a value of D1 is very low and close to 0; a value of E1 is very high and close to 100%, and a value of E2 is very low and close to 0; and a value of F2 is very high and close to 100%, and a value of F1 is very low and close to 0. To increase an amount of information output by the first neural network model, and enable value distribution of similarity between traffic data in each piece of sample data information and preset category to be more smooth, D1 and D2 are used as inputs of a normalized Softmax (T) function (where distillation temperature information T in the Softmax function is consistent with T used by the first reference neural network model), and d1 and d2 are output, where d1 and d2 are soft target 4 output by the first neural network model, and an index Index 1 indicates the soft target 4 (an index Index of the soft target corresponds to the index Index of the traffic data in the information about the first sample data). Similarly, E1 and E2 and F1 and F2 are processed by using the same method, to obtain soft target 5 (e1 and e2) and soft target 6 (f1 and f2), and indexes Index 2 and Index 3 indicate the soft target 5 and soft target 6 respectively. Then, UE 1 analyzes, through comparison, the soft target 4 and the soft target 1 that is in the first indication information, analyzes, through comparison, the soft target 5 and the soft target 2 that is in the first indication information, and analyzes, through comparison, the soft target 6 and the soft target 3 that is in the first indication information, so as to learn a difference between the output result of traffic identification by the first neural network model and an output result of traffic identification by the first reference neural network model, to obtain a loss function Fn1. In addition, the edge network element respectively uses D1 and D2, E1 and E2, and F1 and F2 as inputs of Softmax (T=1), to obtain $D2'$, $E1'$, and $F2'$ (where $D2'$ includes information about only D2, E1' includes information about only E1, and F3' includes information about only F3), where $D2'$, $E1'$, and F3' are respectively hard target 1, hard target 2, and hard target 3 that are output by the first neural network model. Then, UE 1 analyzes hard target 1 and a preset result 1 through comparison, analyzes hard target 2 and a preset result 2 through comparison, and analyzes hard target 3 and a preset result 3 through comparison, to obtain a loss function Fn2. The preset result 1, the preset result 2, and the preset result 3 are that traffic data information stored in the first data information of UE 1 corresponds to the traffic data of the preset categories. For example, the preset result 1 is that the traffic data of the 3D movie is identified as belonging to the traffic category of 3D video, the preset result 2 is that the traffic data in movie transmission belongs to the traffic category of high-definition video transmission, and the preset result 3 is that the traffic data of human-machine interaction belongs to the traffic category of AR/VR. When the first neural network model performs a traffic identification task, the preset result is used for comparison with an output result, to determine whether the result output by the first neural network model is correct. For example, when the output result of the first neural network model is that the traffic data of the 3D movie is identified as the traffic category of AR/VR, it is clearly incorrect because based on the preset result 1, the traffic data of the 3D movie is identified as belonging to the traffic category of 3D video. Then, UE 1 adjusts the first neural network model based on the loss functions Fn1 and Fn2, to decrease values of the loss functions Fn1 and Fn2, so as to enhance a generalization capability of the first neural network model for traffic identification, and implement distillation training by UE 1 on the first neural network model.

10. UE 1 sends a first training result notification to the RAN, to notify the RAN that distillation training on the first neural network model is completed, and feed back information about the first neural network model on which distillation training is completed.

11. The RAN releases a channel resource of a distillation training communication connection to UE 1.

In this embodiment, before UE 1 performs distillation training on a neural network model, UE 1 needs to establish the distillation training communication connection to the RAN. Based on exchange of distillation training information between UE 1 and the RAN, the RAN configures the first reference neural network model by using the first configuration information sent by UE 1. The first reference neural network model is a trained neural network model. After configuring the first reference neural network model, the RAN performs operation processing on the first sample data in the first data information based on the configured first reference neural network model by using the first data information, to obtain the first indication information, where the first indication information is "knowledge" obtained through distillation training on the first reference neural network model. The RAN sends the first indication information to UE 1, and UE 1 trains, by using the first indication information, the first neural network model designed by UE 1. In this manner, the RAN indicates, by transferring the "knowledge", distillation training by UE 1. According to the method, the RAN and UE 1 perform separate distillation training, so that UE 1 can perform personalized small network design and training, thereby balancing a size of a neural network model and precision of the neural network model, improving efficiency of distillation training, and saving storage space of UE 1.

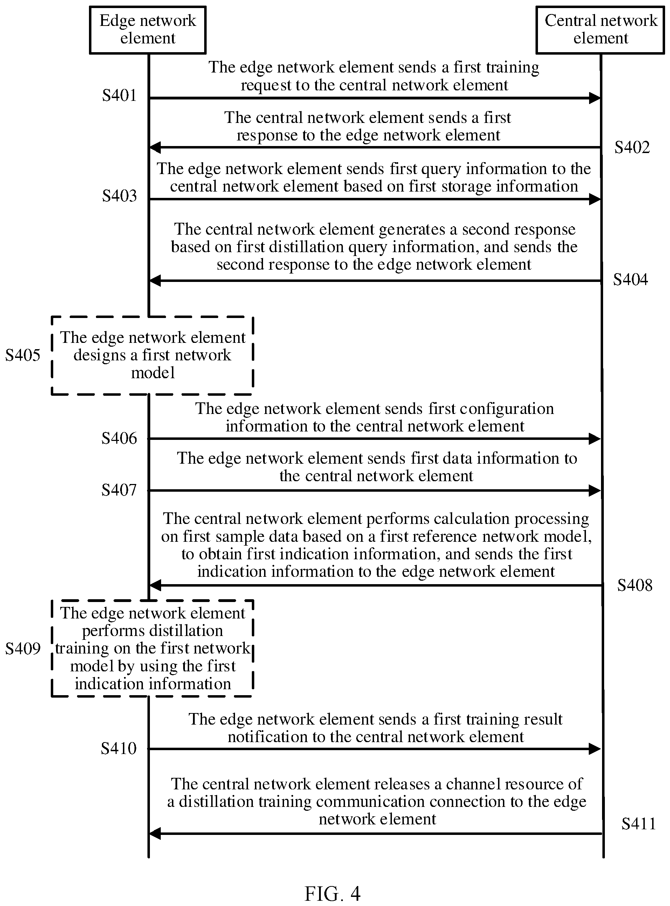

FIG. 4 is a schematic flowchart of model distillation training according to an embodiment of this application. Before performing distillation training on a neural network model, a first device establishes a distillation training communication connection to a second device, and exchanges related distillation training information with the second device, to transfer "knowledge" of the second device, so as to indicate the first device to perform distillation training on the neural network model. In FIG. 4, an example in which the first device is an edge network element and the second device is a central network element is used. Steps in which the edge network element performs distillation training on a neural network model are as follows:

Step S401: The edge network element sends a first training request to the central network element.

Specifically, the edge network element needs to establish the distillation communication connection to the central network element before performing distillation training on a neural network model. The edge network element first sends the first training request to the central network element, where the first training request is used by the edge network element to notify the central network element that the edge network element has a requirement for distillation training on a neural network model of a function type. In addition, the first training request includes a first training type ID, where the first training ID indicates a function type of distillation training by the edge network element on a neural network model, and the function type includes image recognition, facial recognition, and the like.

Step S402: The central network element sends a first response to the edge network element.

Specifically, after receiving the first training request sent by the edge network element, the central network element compares the first training type ID with a second training type ID of the central network element. If the first training type ID is consistent with the second training type ID, it indicates that the central network element has a reference neural network model that supports distillation training performed by the edge network element, and the reference neural network model has the function type indicated by the first training type ID. The second training type ID is a function type of distillation training supported by the central network element. The central network element finds, based on the second training type ID, the first reference neural network model from a plurality of reference neural network models deployed by the central network element, where the first reference neural network model has the function type indicated by the second training type ID. The central network element sends the first response to the edge network element, where the first response includes an ID of the first reference neural network model and first storage information. The first storage information indicates a size of storage space occupied by the first reference neural network model.

If the first training type ID is inconsistent with the second training type ID, it indicates that the central network element does not have a reference neural network model corresponding to the first training type ID. In this case, the central network element cannot perform distillation based on the reference neural network model and first data information sent by the edge network element to obtain first indication information. Because the edge network element lacks the first indication information, the edge network element cannot use the first indication information to perform distillation training on a neural network model. Consequently, the central network element cannot indicate the edge network element to perform distillation training on a neural network model. In this embodiment of this application, an example is used in which the first training type ID is consistent with the second training type ID.

Step S403: The edge network element sends first query information to the central network element based on the first storage information.

Specifically, the first query information includes first distillation query information and first distillation capability information. The first distillation query information is sent by the edge network element to the central network element based on the first storage information, and this is specifically as follows: When a capability such as a resource storage capability of the edge network element exceeds a threshold, and the threshold is greater than the storage space that is occupied by the first reference neural network model and that is indicated by the first storage information, the first distillation query information is used to query whether the central network element supports, in a manner of sending the first indication information to the edge network element, distillation training by the edge network element. When a capability such as a resource storage capability of the edge network element is lower than the storage space that is occupied by the first reference neural network model and that is indicated by the first storage information, the first distillation query information is used to query whether the central network element supports, in a manner in which the central network element obtains a small network through distillation training and delivers the small network to the edge network element, distillation training by the edge network element. In this embodiment, an example is used in which a small network can be designed when the capability such as the resource storage capability of the edge network element exceeds a threshold. Therefore, the first distillation query information is used to query whether the central network element supports distillation training performed by the edge network element, and in which manner the training is supported.

The first distillation capability information indicates a distillation training capability of the edge network element, and the capability includes one or more of the following: a design capability for a neural network model, a distillation training capability for a neural network model, and whether the edge network element has distillation training data information. The design capability for the neural network model indicates whether the edge network element has a capability of independently designing a small neural network model. The distillation training capability for the neural network model indicates whether the edge network element has a capability of performing distillation training on the first neural network model when the edge network element can independently design the first neural network model. The distillation training capability for the neural network model includes one or more of the following: whether the edge network element supports a training package for algorithm training, whether the edge network element has a GPU chip, and hardware capabilities such as a tensor core of the GPU chip, a quantity of floating-point operations per second, a GPU memory bandwidth, a dominant frequency of a CPU, a cache size of a CPU, an architecture category, and storage space. Distillation training data is the first data information of the edge network element, and is used by the central network element to obtain the first indication information based on first sample data in the first data information, to indicate the edge network element to perform distillation training. In this embodiment of this application, an example is used in which the edge network element has the neural network model design capability, the distillation training capability for a neural network model, and the distillation training data information.

Step S404: The central network element generates a second response based on the first distillation query information, and sends the second response to the edge network element.

Specifically, after receiving the first distillation query information, the central network element sends the second response to the edge network element based on parameters such as a storage resource and hardware performance of the central network element, where the second response indicates that the central network element supports distillation training performed by the edge network element, and supports, in a manner of sending the first indication information to the edge network element, distillation training by the edge network element.

Step S405: The edge network element designs the first neural network model.

Specifically, if the edge network element needs to refer to structure information of the first reference neural network model to design the first neural network model, and when the structure information of the first reference neural network model has been loaded, the edge network element designs the small network based on the structure information of the first reference neural network model, where the small network is the first neural network model.

In a possible implementation, if the edge network element needs to refer to the structure information of the first reference neural network model to design the first neural network model, and when the structure information of the first reference neural network model is not loaded, the edge network element sends a first network structure request to the central network element, where the first network structure request is used by the edge network element to request the central network element to provide the structure information of the first reference network structure model. The central network element sends a first structure request response to the edge network element based on the first network structure request, where the first structure request response includes the structure information of the first reference neural network model. The edge network element designs the small network based on the structure information of the first reference neural network model, and the small network is the first neural network model.

Step S406: The edge network element sends first configuration information to the central network element.

Specifically, the first configuration information sent by the edge network element to the central network element is used by the central network element to configure the first reference neural network model. The first configuration information includes first distillation temperature information. The first distillation temperature information is a temperature parameter T of a normalized exponential function Softmax. The temperature parameter T is obtained based on a size difference between the first neural network model and the first reference neural network model, and is used to increase an amount of information output by the first reference neural network model after distillation. The first configuration information further includes a knowledge type KnowledgeType and the ID of the first reference neural network model. The knowledge type KnowledgeType indicates a type of the first indication information required by the edge network element. The type of the first indication information includes a soft target output by the first reference neural network model, feature information output by a middle of the first reference neural network model, a relationship between network layers in the first reference neural network model, and the like. The ID of the first reference neural network model is used to associate the first configuration information with the first reference neural network model, so as to avoid confusion with another neural network model of the central network element.

Step S407: The edge network element sends the first data information to the central network element.

Specifically, the first data information sent by the edge network element to the central network element is processed by the central network element based on the first reference neural network model, to obtain the first indication information. The first data information includes the first sample data, the first sample data is sample data used by the first reference neural network model for distillation training, and the first sample information further includes a sample data index Index and the ID of the first reference neural network model. The sample data index Index is a label of each piece of first sample data, and indicates the first sample data. The ID of the first reference neural network model is used to associate the first configuration information with the first reference neural network model, to avoid confusion with another neural network model of the central network element.

Step S408: The central network element performs calculation processing on the first sample data based on the first reference neural network model, to obtain the first indication information, and sends the first indication information to the edge network element.

Specifically, the first indication information includes distillation knowledge DistillationKnowledge and the ID of the first reference neural network model, and the first indication information indicates the edge network element to train the first neural network model. The central network element inputs, based on Indexes, the first sample data into the first reference neural network model one by one for calculation processing. A specific process is as follows: Analysis through comparison is separately performed on the input first sample data and a preset category that is in the first reference neural network model, to obtain the first indication information, and the sample data index Index and the distillation knowledge DistillationKnowledge are associated. Then, the central network element sends the first indication information to the edge network element. The ID of the first reference neural network model is used to associate the distillation knowledge DistillationKnowledge with the first reference neural network model, so as to avoid confusion with another neural network model of the central network element.

Step S409: The edge network element performs distillation training on the first neural network model by using the first indication information.

Specifically, when a type of the first indication information received by the edge network element is the soft target output by the first reference neural network model, to be specific, the first indication information is similarity between the first sample data and the preset category that is in the first reference neural network model, a process in which the edge network element performs distillation training on the first neural network model by using the first indication information is as follows: The edge network element inputs the first sample data into the first neural network model one by one based on the Indexes, and then analyzes, through comparison, the first sample data and a preset category that is in the first neural network model, to obtain the similarity between the first sample data and the preset category. Then, the edge network element outputs a soft target by processing the similarity based on a Softmax function (where a temperature parameter T configured in the Softmax function of the first neural network model is the same as the temperature parameter T configured in Softmax of the first reference neural network model), and analyzes, through comparison, the soft target and the soft target output by the first reference neural network model, to obtain a loss function Fn1. In addition, the edge network element processes the similarity between the first sample data and the preset category based on another Softmax function (where a configured temperature parameter T is equal to 1), to obtain a hard target, and analyzes the hard target and a preset result of the first sample data through comparison, to obtain a loss function Fn2. The edge network element adjusts the first neural network model based on Fn1 and Fn2, to decrease values of the loss functions Fn1 and Fn2, so as to enhance a generalization capability of the first neural network model, and implement distillation training by the edge network element on the first neural network model.

In a possible implementation, when the type of the first indication information received by the edge network element is the feature information output by the middle of the first reference neural network model, to be specific, when the first indication information is the first feature information output by a middle network layer of the first reference neural network model when analysis through comparison is performed on the first sample data and the preset category that is in the first reference neural network model, a process in which the edge network element performs distillation training on the first neural network model by using the first indication information is as follows: The edge network element inputs the first sample data into the first neural network model one by one based on Indexes, to obtain second feature information output by the middle layer of the first neural network model when analysis through comparison is performed on the first sample data and a preset category that is in the first neural network model. Then, analysis through comparison is performed on the second feature information and the first feature information, to obtain a loss function Fn3. The edge network element adjusts a parameter of the first neural network model based on Fn3, to decrease a value of the loss function Fn3, so as to enhance a generalization capability of the first neural network model, and implement distillation training by the edge network element on the first neural network model.

In a possible implementation, if the type of the first indication information received by the edge network element is the relationship between network layers of the first reference neural network model, a process in which the edge network element performs distillation training on the first neural network model by using the first indication information is as follows: The edge network element inputs the first sample data into the first neural network model one by one based on Indexes, then analyzes, through comparison, the first sample data and a preset category that is in the first neural network model to obtain a relationship between network layers in the first neural network model, and analyzes the relationship between network layers in the first neural network model and the first indication information through comparison, to obtain a loss function Fn4. The edge network element adjusts a parameter of the first neural network model based on Fn4, to decrease a value of the loss function Fn4, so as to enhance a generalization capability of the first neural network model, and implement distillation training by the edge network element on the first neural network model.

Step S410: The edge network element sends a first training result notification to the central network element.

Specifically, after completing distillation training on the first neural network model, the edge network element sends a first training result notification to the central network element, where the first training result notification is used to notify the central network element whether distillation training is completed. When distillation training by the edge network element is completed, information (for example, whether the edge network element receives the first neural network model obtained on which distillation training is performed) about the edge network element for the trained first neural network model is fed back to the central network element.

It should be noted that, because there are other indicator requirements on precision, a generalization capability, and the like of a neural network model for distillation training, training on the first neural network model by the edge network element cannot be completed in one time, and steps S407 to S409 usually need to be repeated. Whether distillation training by the edge network element is completed is determined by a convergence status of a loss function Fn of the edge network element in distillation training or whether a preset maximum quantity of iterations is reached. For example, when the loss function Fn of the edge network element in distillation training reaches a preset value y, it may be considered that the first neural network model on which the edge network element performs distillation training reaches required precision, and distillation training by the edge network element has been completed. Alternatively, after the preset quantity of times of the edge network element is reached in distillation training, distillation training ends.

Step S411: The central network element releases a channel resource of the distillation training communication connection to the edge network element.

Specifically, after receiving the first training result notification, the central network element determines whether distillation training by the edge network element is completed. When distillation training by the edge network element is completed, the central network element releases the resource of the distillation training communication connection between the central network element and the edge network element, to avoid occupying another channel resource of the central network element and the edge network element.

In this embodiment, before the edge network element performs distillation training on a neural network model, the edge network element needs to establish the distillation training communication connection to the central network element. Based on exchange of the distillation training information between the edge network element and the central network element, the central network element configures the first reference neural network model by using the first configuration information sent by the edge network element. The first reference neural network model is a trained neural network model. After configuring the first reference neural network model, the central network element performs operation processing on the first sample data in the first data information based on the configured first reference neural network model by using the first data information, to obtain the first indication information, where the first indication information is "knowledge" obtained through distillation training on the first reference neural network model. The central network element sends the first indication information to the edge network element, and the edge network element trains, by using the first indication information, the first neural network model designed by the edge network element. In this manner, the central network element indicates, by transferring the "knowledge", distillation training by the edge network element. According to the method, the central network element and the edge network element perform separate distillation training, so that the edge network element may perform personalized small network design and training, thereby balancing a size of a neural network model and precision of the neural network model, improving efficiency of distillation training, and saving storage space of the edge network element.

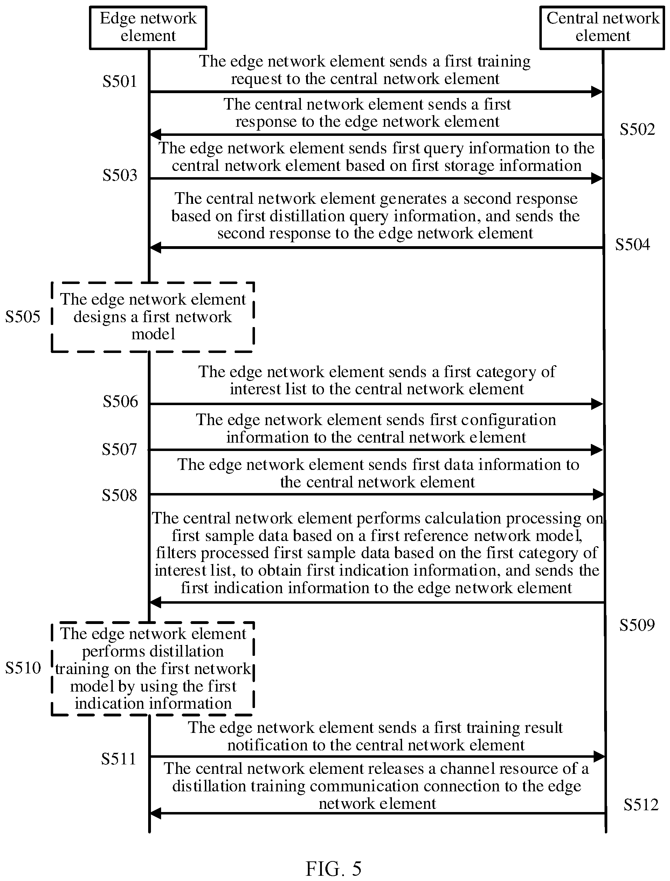

FIG. 5 is a schematic flowchart of another model distillation training according to an embodiment of this application. Before sending the first configuration information to a second device, a first device needs to send a first category of interest list to the second device. First indication information received by the first device is information obtained by the second device through filtering based on the first category of interest list. In FIG. 5, an example in which the first device is an edge network element and the second device is a central network element is used. Steps in which the edge network element performs distillation training on a neural network model are as follows:
For step S501 to step S505, refer to step S401 to step S405. Details are not described herein again.

Step S506: The edge network element sends the first category of interest list to the central network element.

Specifically, the first category of interest list sent by the edge network element to the central network element includes a set of categories in which the edge network element is interested for distillation training, where the set of categories in which the edge network element is interested for distillation training is a subset of a category set in a first category list, and the first category list includes a set of preset categories that are in a first reference neural network model. The edge network element may obtain, by sending the first category of interest list to the central network element, first indication information corresponding to the category in which the edge network element is interested for distillation training, so that the edge network element can perform personalized training on the first neural network model.

For step S507 and step S508, refer to step S406 and step S407. Details are not described herein again.

Step S509: The central network element performs calculation processing on first sample data based on the first reference neural network model, filters processed first sample data based on the first category of interest list, to obtain the first indication information, and sends the first indication information to the edge network element.

Specifically, similar to step S408, the central network element inputs the first sample data into the first reference neural network model one by one based on Indexes, and analyzes, through comparison, the first sample data and the preset category that is in the first reference neural network model, to obtain indication information. The central network element obtains, from the indication information through filtering based on the category that is in the first category of interest list, indication information corresponding to the category that is in the first category of interest list, to obtain the first indication information. Then, the central network element sends the first indication information to the edge network element.

For step S510 to step S512, refer to step S409 to step S411. Details are not described herein again.

In this embodiment, before the central network element sends the first indication information, the edge network element sends the first category of interest list to the central network element, to indicate the central network element to filter, based on the category of interest in the first category of interest list, the indication information obtained by processing the first sample data based on the first reference neural network model. In a manner of sending the first category of interest list to the central network element, the central network element filters the indication information obtained by analyzing, through comparison, the first sample data and the preset category that is in the first reference neural network model, so that the obtained first indication information better meets a requirement of the edge network element for distillation training, and communication overheads are further reduced without affecting an effect of distillation training on the first neural network model, thereby saving network resources in separate distillation training, and saving storage space of the edge network element.

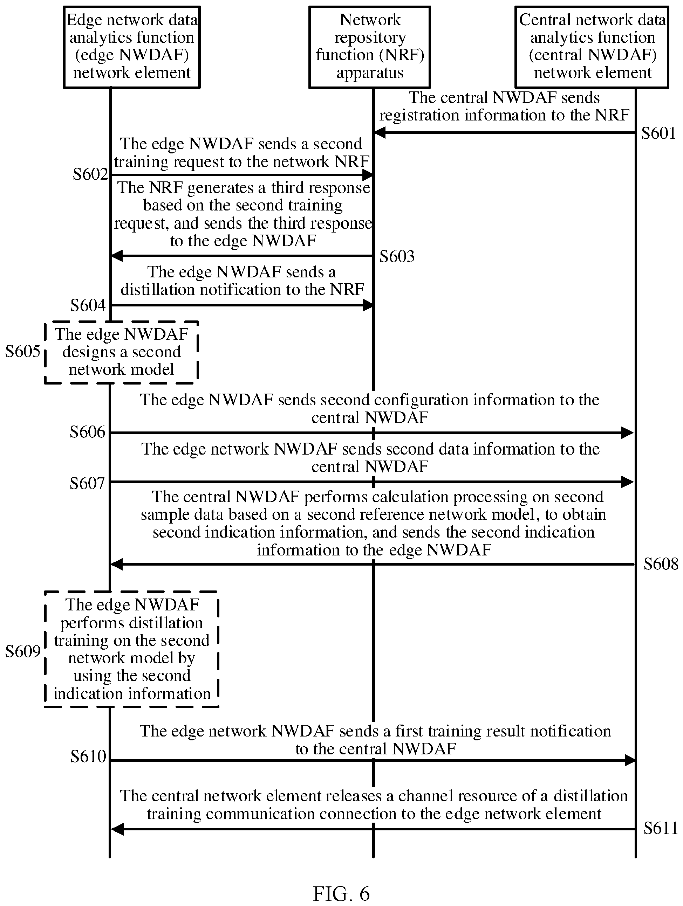

FIG. 6 is a schematic flowchart of another model distillation training according to an embodiment of this application. Before a second device indicates a first device to perform distillation training on a neural network model, a distillation training communication connection between the first device and the second device needs to be established via a third device. In FIG. 6, for example, the first device is an edge NWDAF, the second device is a central NWDAF, and the third device is a network repository function (Network Repository Function, NRF) apparatus. Steps of performing distillation training on a neural network model by the edge NWDAF are as follows:
Step S601: The central NWDAF sends registration information to the NRF.

Specifically, the registration information includes: a third training type ID, indicating a function type of a neural network model on which the central NWDAF supports distillation training; a third neural network model ID, indicating a second reference neural network model corresponding to the third training type ID, where the second reference neural network model has a function indicated by the third training type ID; second storage information, indicating a size of storage space occupied by the second reference neural network model; and training response information, indicating whether the central NWDAF supports distillation training on a neural network model and a manner of supporting distillation training on the neural network model when the central NWDAF supports distillation training on the neural network model. The registration information further includes: a second category list, where the second category list includes a set of preset categories that are in the central NWDAF; and an ID of the central NWDAF, indicating a device number of the central NWDAF, to avoid confusion caused when a plurality of central NWDAFs register with the NRF. The central NWDAF sends the registration information to the NRF, so that the NRF matches the central NWDAF with the edge NWDAF based on the registration information, to establish the distillation training communication connection between the central NWDAF and the edge NWDAF.

Step S602: The edge NWDAF sends a second training request to the network NRF.

Specifically, the second training request includes: a fourth training type ID, indicating a function type of a neural network model on which the edge NWDAF is to perform distillation training; second query information, used by the edge NWDAF to query the NRF whether the central NWDAF supports distillation training and a manner of supporting distillation training when the central NWDAF supports distillation training; and second distillation capability information, indicating a capability of distillation training by the edge NWDAF, where the second distillation capability information includes one or more of the following: a design capability of the edge NWDAF for a neural network model, a training capability for a neural network model, and whether the edge NWDAF has distillation training data. The second training request further includes an excluded set, the excluded set includes an ID of a central NWDAF that fails to establish a distillation training communication connection to the edge NWDAF. When registration information included in the NRF includes the ID that is of the central NWDAF and that is in the excluded set, the NRF no longer establishes the distillation training communication connection for the central NWDAF and the edge NWDAF.

Step S603: The NRF generates a third response based on the second training request, and sends the third response to the edge NWDAF.

Specifically, after receiving the second training request, the NRF determines whether the third training type ID is consistent with the fourth training type ID. If the third training type ID is consistent with the fourth training type ID, the NRF generates a third response (in this embodiment, an example in which the third training type ID is consistent with the fourth training type ID is used), and sends the third response to the edge NWDAF. The third response includes the training response information, the third neural network model ID, the second storage information, and the second category list, and further includes the ID of the central NWDAF.

Step S604: The edge NWDAF sends a distillation notification to the NRF.

Specifically, after receiving the third response, the edge NEDAF learns, based on the training response information in the third response (in this embodiment, for example, the training response information indicates that the central NWDAF supports distillation training performed by the edge NWDAF on a neural network model, and indicates, in a manner of sending indication information to the edge NWDAF, the edge NWDAF to perform distillation training on a neural network model), that the central NWDAF supports distillation training and the manner of distillation training, and learns, based on the third neural network model ID and the second storage information, information about the second reference neural network model and the size of storage space occupied by the second reference neural network model. The edge NWDAF establishes the distillation training communication connection to the central NWDAF based on information about the central NWDAF obtained in the third response and the ID of the central NWDAF, and sends the distillation notification to the NRF after establishment of the communication connection is completed. The distillation notification is used to notify the NRF that the edge NWDAF is successfully connected to the central NWDAF. Then, the NRF releases communication resources between the NRF and the edge NWDAF and between the NRF and the central NWDAF based on the distillation notification.

For step S605 to step S611, refer to step S405 to step S411, Details are not described herein again.

In this embodiment, the central NWDAF registers information such as a training type ID and a training response on the NRF, and the edge NWDAF sends a training request to the NRF. The NRF can quickly and effectively establish the distillation communication connection between the edge NWDAF and the central NWDAF, thereby improving efficiency of distillation training, helping distillation training by the edge NWDAF on a neural network model, and saving storage space of the edge NWDAF.

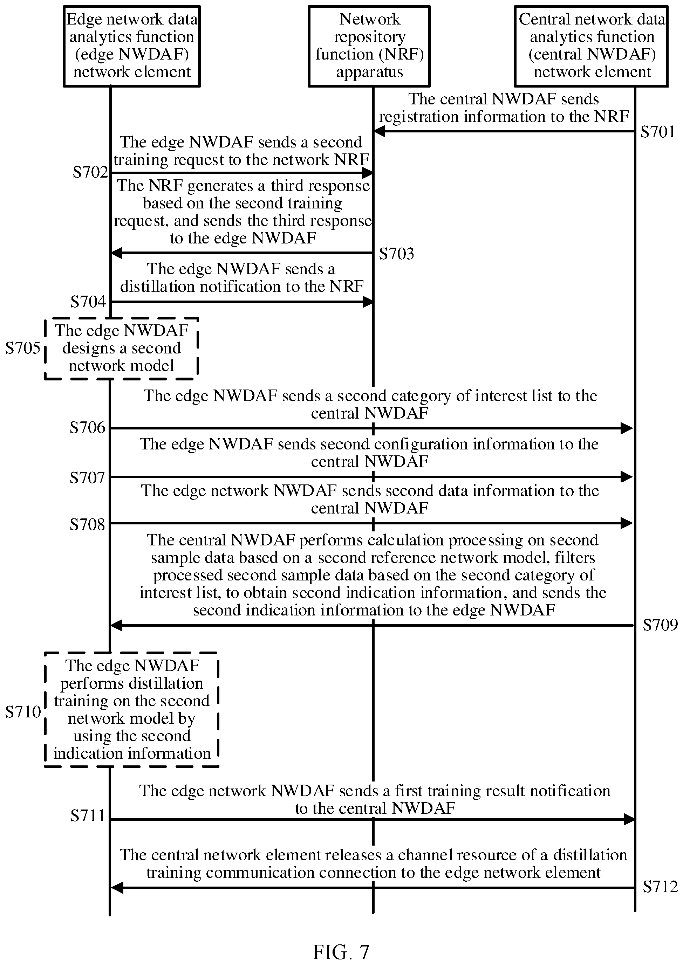

FIG. 7 is a schematic flowchart of another model distillation training according to an embodiment of this application. Before sending second configuration information to a second device, a first device sends a second category of interest list to the second device. Second indication information received by the first device is information obtained by the second device through filtering based on the second category of interest list. In FIG. 7, for example, the first device is an edge NWDAF, the second device is a central NWDAF, and a third device is an NRF. Steps in which the edge NWDAF performs distillation training on a neural network model are as follows:

For steps S701 to S705, refer to steps S601 to S605. Details are not described herein again.

Step S706: The edge NWDAF sends the second category of interest list to the central NWDAF.

Specifically, the second category of interest list sent by the edge NWDAF to the central NWDAF includes a set of categories in which the edge NWDAF is interested for distillation training, where the set of categories in which the edge NWDAF is interested for distillation training is a subset of a category set in a second category list, and the second category list includes a set of preset categories that are in a second reference neural network model. The edge NWDAF may obtain, by sending the second category of interest list to the central NWDAF, the second indication information corresponding to the category in which the edge NWDAF is interested for distillation training, so that the edge NWDAF can perform personalized training on the second neural network model.

For step S707 and step S708, refer to step S606 and step S607. Details are not described herein again.

Step S709: The central NWDAF performs calculation processing on second sample data based on the second reference neural network model, filters processed second sample data based on the second category of interest list, to obtain the second indication information, and sends the second indication information to the edge NWDAF.

The central NWDAF inputs the second sample data in the second data information into the second reference neural network model one by one based on Indexes, and analyzes, through comparison, the second sample data and the preset category that is in the second reference neural network model, to obtain indication information. The central NWDAF obtains, from the indication information through filtering based on the category in the second category of interest list, indication information related to the category that is in the second category of interest list, to obtain the second indication information. Then, the central NWDAF sends the second indication information to the edge NWDAF.

For step S710 to step S712, refer to step S609 to step S611. Details are not described herein again.

In this embodiment, before the central NWDAF sends the second indication information, the edge NWDAF sends the second category of interest list to the central NWDAF, to indicate the central NWDAF to filter, based on the category of interest in the second category of interest list, the indication information obtained by processing the second sample data based on the second reference neural network model. In a manner of sending the second category of interest list to the central NWDAF, the central NWDAF filters the indication information obtained by analyzing, through comparison, the second sample data and the preset category that is in the second reference neural network model, so that the obtained second indication information better meets a requirement of the edge NWDAF for distillation training, and communication overheads are further reduced without affecting an effect of distillation training on the second neural network model, thereby saving network resources in separate distillation training, and further saving storage space of the NWDAF.

The foregoing describes in detail the methods in embodiments of this application, and the following provides related apparatuses in embodiments.

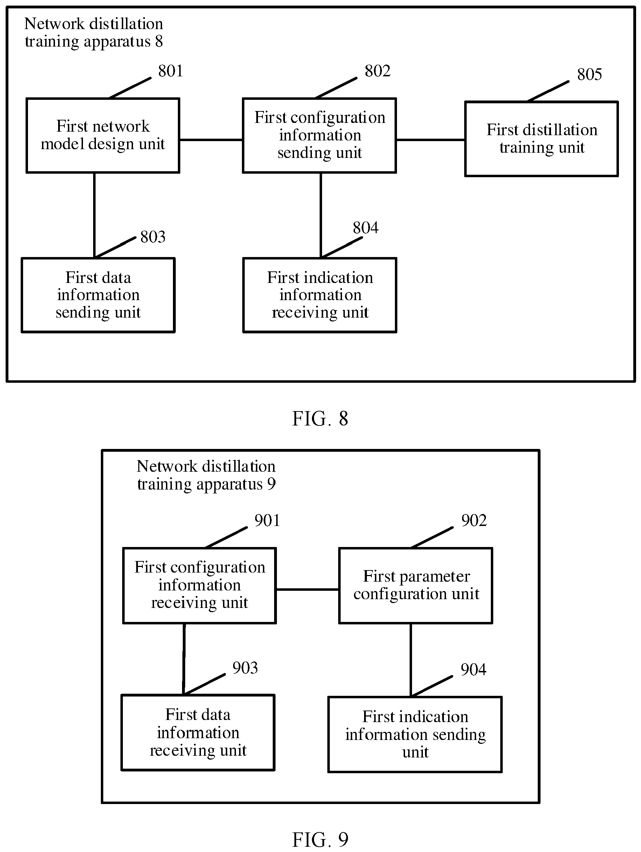

FIG. 8 is a schematic structural diagram of a model distillation training apparatus according to an embodiment of this application. A model distillation training apparatus 8 may be the first device in the foregoing method embodiments. The model distillation training apparatus 8 may include a first neural network model design unit 801, a first configuration information sending unit 802, a first data information sending unit 803, a first indication information receiving unit 804, and a first distillation training unit 805. Detailed descriptions of the units are as follows:

The first neural network model design unit 801 is configured to design a first neural network model if a second device supports distillation training performed by the first device on a neural network model.

The first configuration information sending unit 802 is configured to send first configuration information to the second device.

The first data information sending unit 803 is configured to send first data information to the second device.

The first indication information receiving unit 804 is configured to receive first indication information returned by the second device.

The first distillation training unit 805 is configured to train the first neural network model by using the first indication information.

In a possible implementation, the model distillation training apparatus 8 further includes:

a first training request sending unit, configured to send a first training request to the second device before the first neural network model design unit 801 designs the first neural network model;
a first response receiving unit, configured to: after the first training request sending unit sends the first training request to the second device, if a second training type ID is consistent with a first training type ID, receive a first response sent by the second device;
a first query information sending unit, configured to send first query information to the second device based on first storage information; and
a second response receiving unit, configured to: after the first query information sending unit sends the first query information to the second device, receive a second response of the second device.

In a possible implementation, the model distillation training apparatus 8 further includes:
a first category of interest list sending unit, configured to: before the first configuration information sending unit 802 sends the first configuration information to the second device, send a first category of interest list to the second device.

In a possible implementation, the model distillation training apparatus 8 further includes:

a first network structure request sending unit, configured to send a first network structure request to the second device before the first neural network model design unit 801 designs the first neural network model; and

a first structure request response receiving unit, configured to: after the first network structure request sending unit sends the first network structure request to the second device, receive a first structure request response sent by the second device.

FIG. 9 is a schematic structural diagram of a model distillation training apparatus according to an embodiment of this application. A model distillation training apparatus 9 may be the second device in the foregoing method embodiments. The model distillation training apparatus 9 may include a first configuration information receiving unit 901, a first parameter configuration unit 902, a first data information receiving unit 903, and a first indication information sending unit 904. Detailed descriptions of the units are as follows:

The first configuration information receiving unit 901 is configured to receive first configuration information sent by a first device.

The first parameter configuration unit 902 is configured to configure a first reference neural network model by using the first configuration information.

The first data information receiving unit 903 is configured to receive first data information sent by the first device.

The first indication information sending unit 904 is configured to send first indication information to the first device.

In a possible implementation, the model distillation training apparatus 9 further includes:

a first training request receiving unit, configured to: before the first parameter configuration unit 902 configures the first reference neural network model, receive a first training request sent by the first device;

a first response sending unit, configured to: if a second training type ID is consistent with a first training type ID, generate a first response based on the first training request, and send the first response to the first device;

a first query information receiving unit, configured to receive first query information sent by the first device; and

a second response sending unit, configured to: after the first query information receiving unit receives the first query information sent by the first device, send a second response to the first device.

In a possible implementation, the model distillation training apparatus 9 further includes:

a first category of interest list receiving unit, configured to: before the first configuration information receiving unit receives the first configuration information sent by the first device, receive a first category of interest list sent by the first device.

In a possible implementation, the model distillation training apparatus 9 further includes:

a first network structure request receiving unit, configured to: before the first configuration information receiving unit 901 receives the first configuration information sent by the first device, receive a first network structure request sent by the first device; and

a first structure request response sending unit, configured to send a first structure request response to the first device.

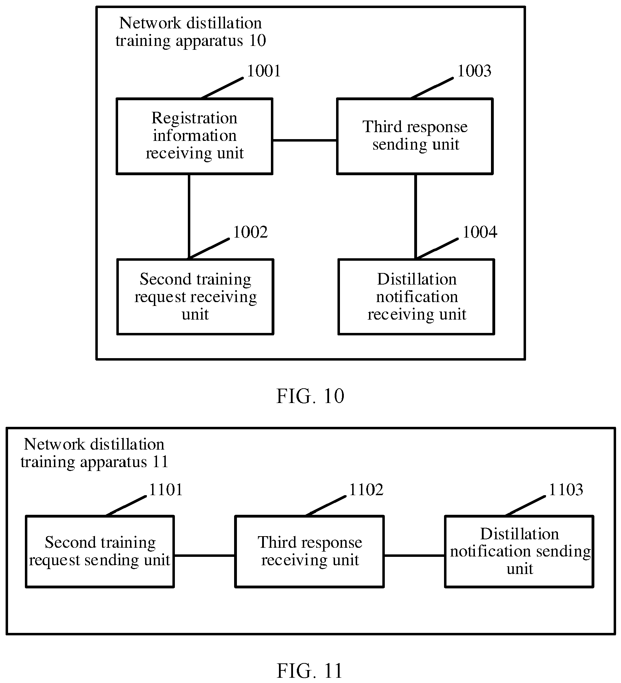

FIG. 10 is a schematic structural diagram of a model distillation training apparatus according to an embodiment of this application. The model distillation training apparatus 10 may be the third device in the foregoing method embodiments. The model distillation training apparatus 10 may include a registration information receiving unit 1001, a second training request receiving unit 1002, a third response sending unit 1003, and a distillation notification receiving unit 1004. Detailed descriptions of the units are as follows:

The registration information receiving unit 1001 is configured to receive registration information sent by a second device.

The second training request receiving unit 1002 is configured to receive a second training request sent by a first device.

The third response sending unit 1003 is configured to: if a fourth training type ID is consistent with a third training type ID, generate a third response based on the second training request, and send the third response to the first device.

The distillation notification receiving unit 1004 is configured to receive a distillation notification sent by the first device.

FIG. 11 is a schematic structural diagram of a model distillation training apparatus according to an embodiment of this application. The model distillation training apparatus 11 may be the first device in the foregoing method embodiments. The model distillation training apparatus 11 may include a second training request sending unit 1101, a third response receiving unit 1102, and a distillation notification sending unit 1103. Detailed descriptions of the units are as follows:

The second training request sending unit 1101 is configured to send a second training request to a third device.

The third response receiving unit 1102 is configured to: if a fourth training type ID is consistent with a third training type ID, receive a third response sent by the third device; and

The distillation notification sending unit 1103 is configured to send a distillation notification to the third device.

In a possible implementation, the model distillation training apparatus 11 further includes:

a second neural network model design unit, configured to: after the distillation notification sending unit 1103 sends the distillation notification to the third device, design a second neural network model based on structure information of a second reference neural network model;

a second configuration information sending unit, configured to send second configuration information to a second device;

a second data information sending unit, configured to send second data information to the second device;

a second indication information receiving unit, configured to receive second indication information returned by the second device; and

a second distillation training unit, configured to perform distillation training on the second neural network model by using the second indication information.

In a possible implementation, the model distillation training apparatus 11 further includes:
a second category of interest list sending unit, configured to: after the second configuration information sending unit sends the second configuration information to the second device, send a second category of interest list to the second device.

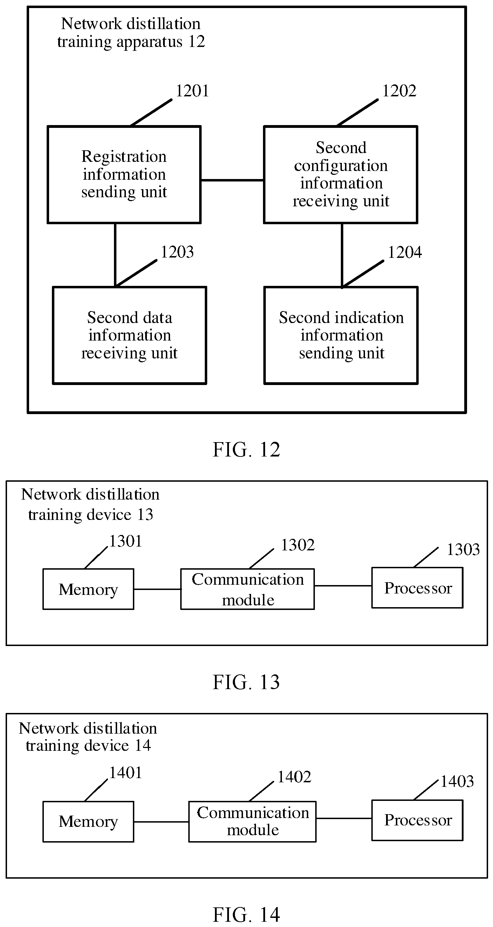

FIG. 12 is a schematic structural diagram of a model distillation training apparatus according to an embodiment of this application. The model distillation training apparatus 12 may be the second device in the foregoing method embodiments. The model distillation training apparatus 12 may include a registration information sending unit 1201, a second configuration information receiving unit 1202, a second data information receiving unit 1203, and a second indication information sending unit 1204. Detailed descriptions of the units are as follows:
The registration information sending unit 1201 is configured to send registration information to a third device.

The second configuration information receiving unit 1202 is configured to receive second configuration information sent by a first device.

The second data information receiving unit 1203 is configured to receive second data information sent by the first device.

The second indication information sending unit 1204 is configured to send second indication information to the first device.

In a possible implementation, the model distillation training apparatus 12 further includes:
a second category of interest list receiving unit, configured to: before the second configuration information receiving unit 1202 receives the second configuration information sent by the first device, receive a second category of interest list sent by the first device.

In a possible implementation, the model distillation training apparatus 12 further includes:

a second network structure request receiving unit, configured to: before the second configuration information receiving unit 1202 receives the second configuration information sent by the first device, receive a second network structure request sent by the first device; and

a second structure request response sending unit, configured to send a second structure request response to the first device based on the second network structure request.

FIG. 13 is a schematic structural diagram of a model distillation training device according to an embodiment of this application. The model distillation training device 13 may be the first device in the foregoing method embodiments. The model distillation training device 13 may include a memory 1301, a communication module 1302, and a processor 1303. Detailed descriptions of the units are as follows:
The memory 1301 is configured to store program code.

The processor 1303 is configured to invoke the program code stored in the memory, to perform the following steps:

if a second device supports distillation training performed by the first device on a neural network model, designing a first neural network model;

sending first configuration information to the second device through the communication module 1302;

sending first data information to the second device through the communication module 1302;

receiving, through the communication module 1302, first indication information returned by the second device; and

training the first neural network model by using the first indication information.

In a possible implementation, the processor 1303 is further configured to: before designing the first neural network model, send a first training request to the second device through the communication module 1302;

if a second training type ID is consistent with a first training type ID, receive, through the communication module 1302, a first response sent by the second device;

send first query information to the second device through the communication module 1302;

receive a second response of the second device through the communication module 1302.

In a possible implementation, the processor 1303 is further configured to send a first category of interest list to the second device through the communication module 1302.

In a possible implementation, the processor 1303 is further configured to: before designing the first neural network model, send a first network structure request to the second device through the communication module 1302; and
receive, through the communication module 1302, a first structure request response sent by the second device.

FIG. 14 is a schematic structural diagram of a model distillation training device according to an embodiment of this application. The model distillation training device 14 may be the second device in the foregoing method embodiments. The model distillation training device 14 may include a memory 1401, a communication module 1402, and a processor 1403. Detailed descriptions of the units are as follows:
The memory 1401 is configured to store program code.

The processor 1403 is configured to invoke the program code stored in the memory, to perform the following steps:

receiving, through the communication module 1402, first configuration information sent by a first device;
receiving, through the communication module 1402, first data information sent by the first device; and
sending first indication information to the first device through the communication module 1402.

In a possible implementation, the processor 1403 is further configured to: receive, through the communication module 1402, a first training request sent by the first device;

generate a first response;
send the first response to the first device through the communication module 1402;
receive, through the communication module 1402, first query information sent by the first device;
generate a second response; and
send the second response to the first device through the communication module 1402.

In a possible implementation, the processor 1403 is further configured to: before receiving, through the communication module 1402, the first configuration information sent by the first device, receive, through the communication module 1402, a first category of interest list sent by the first device.

In a possible implementation, the processor 1403 is further configured to: before receiving, through the communication module 1402, the first configuration information sent by the first device, receive, through the communication module 1402, a first network structure request sent by the first device; and send a first structure request response to the first device through the communication module 1402.

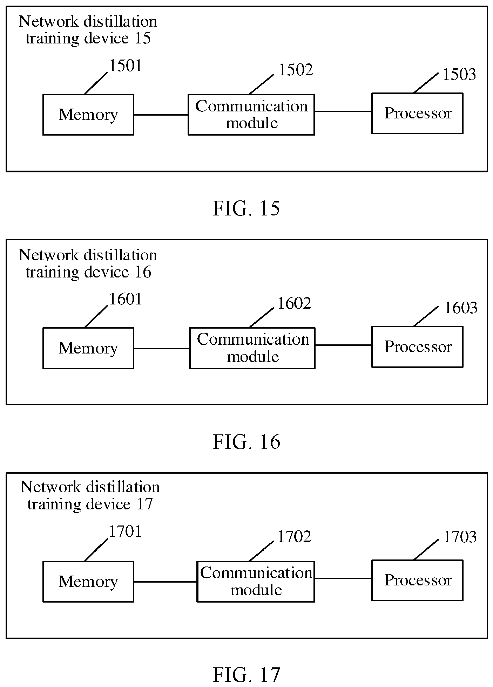

FIG. 15 is a schematic structural diagram of a model distillation training device according to an embodiment of this application. The model distillation training device 15 may be the third device in the foregoing method embodiments. The model distillation training device 15 may include a memory 1501, a communication module 1502, and a processor 1503. Detailed descriptions of the units are as follows:
The memory 1501 is configured to store program code.

The processor 1503 is configured to invoke the program code stored in the memory, to perform the following steps:

receiving, through the communication module 1502, registration information sent by a second device;
receiving, through the communication module 1502, a second training request sent by a first device;
generating a third response;
sending the third response to the first device through the communication module 1502; and
receiving, through the communication module 1502, a distillation notification sent by the first device.

FIG. 16 is a schematic structural diagram of a model distillation training device according to an embodiment of this application. The model distillation training device 16 may be the first device in the foregoing method embodiments. The model distillation training device 16 may include a memory 1601, a communication module 1602, and a processor 1603. Detailed descriptions of the units are as follows:
The memory 1601 is configured to store program code.

The processor 1603 is configured to invoke the program code stored in the memory to perform the following steps: sending a second training request to a third device through the communication module 1602; if a fourth training type ID is consistent with a third training type ID, receiving, through the communication module 1602, a third response sent by the third device; and sending a distillation notification to the third device through the communication module 1602.

In a possible implementation, the processor 1603 is further configured to: design a second neural network model after sending the distillation notification to the third device through the communication module 1602;

send second configuration information to a second device through the communication module 1602;
send second data information to the second device through the communication module 1602;
receive second indication information returned by the second device; and
train the second neural network model by using the second indication information.

In a possible implementation, the processor 1603 is further configured to: before sending the second configuration information to the second device through the communication module 1602, send a second category of interest list to the second device through the communication module 1602; and

perform distillation training on the second neural network model by using the second indication information.

In a possible implementation, the processor 1603 is further configured to: before designing the second neural network model, send a second network structure request to the second device through the communication module 1602; and

receive, through the communication module 1602, a second structure request response sent by the second device.

FIG. 17 is a schematic structural diagram of a model distillation training device according to an embodiment of this application. The model distillation training device 17 may be the second device in the foregoing method embodiments. The model distillation training device 17 may include a memory 1701, a communication module 1702, and a processor 1703. Detailed descriptions of the units are as follows:

The memory 1701 is configured to store program code.

The processor 1703 is configured to invoke the program code stored in the memory, to perform the following steps:

sending registration information to a third device through the communication module 1702;
receiving, through the communication module 1702, second configuration information sent by a first device;
receiving, through the communication module 1702, second data information sent by the first device; and
sending second indication information to the first device through the communication module 1702.

In a possible implementation, the processor 1703 is further configured to: before receiving, through the communication module 1702, the second configuration information sent by the first device, receive, through the communication module 1702, a second category of interest list sent by the first device.

In a possible implementation, the processor 1703 is further configured to: before receiving, through the communication module 1702, the second configuration information sent by the first device, receive, through the communication module 1702, a second network structure request sent by the first device; and

send a second structure request response to the first device through the communication module 1702.

An embodiment of this application provides a computer-readable storage medium. The computer-readable storage medium stores a computer program. When the computer program is executed by a processor, the model distillation training method in the foregoing embodiments and the possible implementations of the foregoing embodiments is implemented.

An embodiment of this application provides a computer program. The computer program includes instructions. When the computer program is executed by a computer, a first device is enabled to perform the procedures performed by the first device in the foregoing embodiments and the possible implementations of the foregoing embodiments, or a second device is enabled to perform the procedures performed by the second device in the foregoing embodiments and the possible implementations of the foregoing embodiments, or a third device is enabled to perform the procedures performed by the third device in the foregoing embodiments and the possible implementations of the foregoing embodiments.

An embodiment of this application provides a chip system. The chip system includes a processor, configured to support a first device in implementing functions in the methods in the foregoing embodiments and the possible manners of embodiments, or a second device in implementing functions in the methods in the foregoing embodiments and the possible manners of embodiments, or a third device in implementing functions in the methods in the foregoing embodiments and the possible manners of embodiments.

In a possible design, the chip system further includes a memory, and the memory is configured to store program instructions and data that are necessary for the first device, the second device, or the third device. The chip system may include a chip, or may include a chip and another discrete device.

It may be understood that a person of ordinary skill in the art may be aware that, in combination with the examples described in embodiments disclosed in this application, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can understand that functions described with reference to various illustrative logical blocks, modules, and algorithm steps disclosed in embodiments of this application may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communication medium that facilitates transmission of a computer program from one place to another (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A model distillation training method, comprising:

   if a second device supports distillation training performed by a first device on a neural network model, designing, by the first device, a first neural network model;
   sending, by the first device, first configuration information to the second device, wherein the first configuration information is used by the second device to configure a first reference neural network model;
   sending, by the first device, first data information to the second device, wherein the first data information comprises first sample data used by the first reference neural network model for distillation training; and
   receiving, by the first device, first indication information returned by the second device, and training the first neural network model by using the first indication information, wherein the first indication information is information obtained by inputting the first sample data into the first reference neural network model.

2. The method according to claim 1, wherein before the designing, by the first device, a first neural network model, the method further comprises:

   sending, by the first device, a first training request to the second device, wherein the first training request comprises a first training type ID, and the first training type ID indicates a function type of a neural network model on which the first device is to perform distillation training;
   if a second training type ID is consistent with the first training type ID, receiving, by the first device, a first response sent by the second device, wherein the first response comprises first storage information, the first storage information indicates a size of storage space occupied by the first reference neural network model, and the second training type ID indicates a function type of a neural network model on which the second device supports distillation training;

sending, by the first device, first query information to the second device based on the first storage information, wherein the first query information comprises first distillation query information, and the first distillation query information is used by the first device to query whether the second device supports distillation training on a neural network model and a manner of supporting distillation training on the neural network model when the second device supports distillation training performed by the first device on the neural network model; and

receiving, by the first device, a second response of the second device.

3. The method according to either of claims 1 and 2, wherein before the sending, by the first device, first configuration information to the second device, the method further comprises:
sending, by the first device, a first category of interest list to the second device, wherein the first category of interest list comprises a set of categories in which the first device is interested for distillation training, the set that is of categories in which the first device is interested for distillation training and that is in the first category of interest list is a subset of a category set in a first category list, and the first category list comprises a set of preset categories of the first reference neural network model.

4. The method according to claim 3, wherein the first indication information is obtained by the second device by performing calculation processing on the first sample data based on the first reference neural network model, and filtering processed first sample data based on the first category of interest list.

5. The method according to any one of claims 1 to 4, wherein the designing, by the first device, a first neural network model comprises:

sending, by the first device, a first network structure request to the second device, wherein the first network structure request is used by the first device to obtain structure information of the first reference neural network model from the second device;

receiving, by the first device, a first structure request response sent by the second device, wherein the first structure request response comprises the structure information of the first reference neural network model; and

designing, by the first device, the first neural network model based on the structure information of the first reference neural network model.

6. A model distillation training method, comprising:

receiving, by a second device, first configuration information sent by a first device, and configuring a first reference neural network model by using the first configuration information;

receiving, by the second device, first data information sent by the first device, wherein the first data information comprises first sample data used by the first reference neural network model for distillation training; and

sending, by the second device, first indication information to the first device, wherein the first indication information is used by the first device to train a first neural network model, and the first indication information is information obtained by inputting the first sample data into the first reference neural network model.

7. The method according to claim 6, wherein before the receiving, by a second device, first configuration information sent by a first device, and configuring a first reference neural network model by using the first configuration information, the method further comprises:

receiving, by the second device, a first training request sent by the first device, wherein the first training request comprises a first training type ID, and the first training type ID indicates a function type of a neural network model on which the first device is to perform distillation training;

if a second training type ID is consistent with the first training type ID, generating, by the second device, a first response based on the first training request, and sending the first response to the first device, wherein the second training type ID indicates a function type of a neural network model on which the second device supports distillation training, the first response comprises first storage information, and the first storage information indicates a size of storage space occupied by the first reference neural network model;

receiving, by the second device, first query information sent by the first device, wherein the first query information comprises first distillation query information, and the first distillation query information is used by the first device to query whether the second device supports distillation training on a neural network model and a manner of supporting distillation training on the neural network model when the second device supports distillation training performed by the first device on the neural network model; and

generating, by the second device, a second response based on the first distillation query information, and sending the second response to the first device.

8. The method according to either of claims 6 and 7, wherein before the receiving, by a second device, first configuration information sent by a first device, the method further comprises:
   receiving, by the second device, a first category of interest list sent by the first device, wherein the first category of interest list comprises a set of categories in which the first device is interested for distillation training, the set that is of categories in which the first device is interested for distillation training and that is in the first category of interest list is a subset of a category set in a first category list, and the first category list comprises a set of preset categories of the first reference neural network model.

9. The method according to claim 8, wherein the first indication information is obtained by the second device by performing calculation processing on the first sample data based on the first reference neural network model, and filtering processed first sample data based on the first category of interest list.

10. The method according to any one of claims 6 to 9, wherein before the receiving, by a second device, first configuration information sent by a first device, the method further comprises:

    receiving, by the second device, a first network structure request sent by the first device, wherein the first network structure request is used by the first device to obtain structure information of the first reference neural network model from the second device; and
    sending, by the second device, a first structure request response to the first device based on the first network structure request, wherein the first structure request response comprises the structure information of the first reference neural network model.

11. A model distillation training method, comprising:

    receiving, by a third device, registration information sent by a second device, wherein the registration information comprises a third training type ID, a third neural network model ID, second storage information, a second category list, and training response information, the training response information indicates whether the second device supports distillation training on a neural network model and a manner of supporting distillation training on the neural network model when the second device supports distillation training on the neural network model, and the third training type ID indicates a function type of the neural network model on which the second device supports distillation training;
receiving, by the third device, a second training request sent by a first device, wherein the second training request comprises a fourth training type ID, second distillation query information, and second distillation capability information, and the fourth training type ID indicates a function type of a neural network model on which the first device is to perform distillation training;
if the fourth training type ID is consistent with the third training type ID, generating, by the third device, a third response based on the second training request, and sending the third response to the first device, wherein the third response comprises the training response information, the third neural network model ID, the second storage information, and the second category list; and
receiving, by the third device, a distillation notification sent by the first device, wherein the distillation result notification indicates whether the first device successfully matches the second device.

12. A model distillation training method, comprising:

    sending, by a first device, a second training request to a third device, wherein the second training request comprises a fourth training type ID, second distillation query information, and second distillation capability information, and the fourth training type ID indicates a function type of a neural network model on which the first device is to perform distillation training;
    if the fourth training type ID is consistent with a third training type ID, receiving, by the first device, a third response sent by the third device, wherein the third response comprises training response information, a third neural network model ID, second storage information, and a second category list, and the third training type ID indicates a function type of a neural network model on which a second device supports distillation training; and
    sending, by the first device, a distillation notification to the third device, wherein the distillation result notification indicates whether the first device successfully matches the second device.

13. The method according to claim 12, wherein after the sending, by the first device, a distillation notification to the third device, the method further comprises:

    designing, by the first device, a second neural network model;
    sending, by the first device, second configuration information to the second device, wherein the second configuration information is used by the second device to configure a second reference neural network model;

sending, by the first device, second data information to the second device, wherein the second data information comprises second sample data used by the second reference neural network model for distillation training; and

receiving, by the first device, second indication information returned by the second device, and training the second neural network model by using the second indication information, wherein the second indication information is information obtained by inputting the second sample data into the second reference neural network model.

14. The method according to claim 13, wherein before the sending, by the first device, second configuration information to the second device, the method further comprises:

sending, by the first device, a second category of interest list to the second device, wherein the second category of interest list comprises a set of categories in which the first device is interested for distillation training, the set that is of categories in which the first device is interested for distillation training and that is in the second category of interest list is a subset of a category set in a second category list, and the second category list comprises a set of preset categories of the second reference neural network model.

15. The method according to claim 14, wherein the second indication information is obtained by the second device by performing calculation processing on the second sample data based on the second reference neural network model, and filtering processed second sample data based on the second category of interest list.

16. The method according to any one of claims 13 to 15, wherein the designing, by the first device, a second neural network model comprises:

sending, by the first device, a second network structure request to the second device, wherein the second network structure request is used by the first device to obtain structure information of the second reference neural network model from the second device;

receiving, by the first device, a second structure request response sent by the second device, wherein the second structure request response comprises the structure information of the second reference neural network model; and

designing, by the first device, the second neural network model based on the structure information of the second reference neural network model.

17. A model distillation training method, comprising:

sending, by a second device, registration information to a third device, wherein the registration information comprises a third training type ID, a third neural network model ID, second storage information, a second category list, and training response information, and the training response information indicates whether the second device supports distillation training on a neural network model and a manner of supporting distillation training on the neural network model when the second device supports distillation training on the neural network model;

receiving, by the second device, second configuration information sent by a first device, wherein the second configuration information is used by the second device to configure a second reference neural network model;

receiving, by the second device, second data information sent by the first device, wherein the second data information comprises second sample data used by the second reference neural network model for distillation training; and

sending, by the second device, second indication information to the first device, wherein the second indication information is used by the first device to train a second neural network model, and the second indication information is information obtained by inputting the second sample data into the second reference neural network model.

18. The method according to claim 17, wherein before the receiving, by the second device, second configuration information sent by a first device, the method further comprises:

receiving, by the second device, a second category of interest list sent by the first device, wherein the second category of interest list comprises a set of categories in which the first device is interested for distillation training, the set that is of categories in which the first device is interested for distillation training and that is in the second category of interest list is a subset of a category set in a second category list, and the second category list comprises a set of preset categories of the second reference neural network model.

19. The method according to claim 18, wherein the second indication information is obtained by the second device by performing calculation processing on the second sample data based on the second reference neural network model, and filtering processed second sample data based on the second category of interest list.

**20.** The method according to any one of claims 17 to 19, wherein before the receiving, by the second device, second configuration information sent by a first device, the method further comprises:

receiving, by the second device, a second network structure request sent by the first device, wherein the second network structure request is used by the first device to obtain structure information of the second reference neural network model from the second device; and
sending, by the second device, a second structure request response to the first device based on the second network structure request, wherein the second structure request response comprises the structure information of the second reference neural network model.

**21.** A model distillation training apparatus, wherein the model distillation training apparatus is a first device, and comprises units for performing the method according to any one of claims 1 to 5 or 12 to 16.

**22.** A model distillation training apparatus, wherein the model distillation training apparatus is a second device, and comprises units for performing the method according to any one of claims 6 to 10 or 17 to 20.

**23.** A model distillation training apparatus, wherein the model distillation training apparatus is a third device, and comprises units for performing the method according to claim 11.

**24.** A model distillation training device, wherein the model distillation training device is a first device, and comprises a processor and a memory, wherein
the memory is configured to store program code, and
the processor is configured to invoke the program code stored in the memory, to perform the model distillation training method according to any one of claims 1 to 5 or 12 to 16.

**25.** A model distillation training device, wherein the model distillation training device is a second device, and comprises a processor and a memory, wherein
the memory is configured to store program code, and
the processor is configured to invoke the program code stored in the memory, to perform the model distillation training method according to any one of claims 6 to 10 or 17 to 20.

**26.** A model distillation training device, wherein the model distillation training device is a third device, and comprises a processor and a memory, wherein
the memory is configured to store program code, and
the processor is configured to invoke the program code stored in the memory, to perform the model distillation training method according to claim 11.

**27.** A computer-readable storage medium, wherein the computer-readable storage medium stores a computer program; and when the computer program is executed by a processor, the method according to any one of claims 1 to 20 is implemented.

FIG. 1

FIG. 2

FIG. 3

```
┌─────────────┐                                                    ┌─────────────┐
│Edge network │                                                    │Central network│
│  element    │                                                    │  element    │
└──────┬──────┘                                                    └──────┬──────┘
```

The edge network element sends a first training
request to the central network element

S401

The central network element sends a first
response to the edge network element

S402

The edge network element sends first query information to the
central network element based on first storage information

S403

The central network element generates a second response
based on first distillation query information, and sends the
second response to the edge network element

S404

┌─ ─ ─ ─ ─ ─ ─ ─ ─┐
│ The edge network element │
S405 │ designs a first network │
│ model │
└─ ─ ─ ─ ─ ─ ─ ─ ─┘

The edge network element sends first configuration
information to the central network element

S406

The edge network element sends first data information to
the central network element

S407

The central network element performs calculation processing
on first sample data based on a first reference network model,
to obtain first indication information, and sends the first
indication information to the edge network element

S408

┌─ ─ ─ ─ ─ ─ ─ ─ ─┐
│ The edge network element │
│ performs distillation │
S409 │ training on the first network │
│ model by using the first │
│ indication information │
└─ ─ ─ ─ ─ ─ ─ ─ ─┘

The edge network element sends a first training result
notification to the central network element

S410

The central network element releases a channel resource of
a distillation training communication connection to the edge
network element

S411

FIG. 4

Edge network element | | Central network element

S501 — The edge network element sends a first training request to the central network element →

S502 — ← The central network element sends a first response to the edge network element

S503 — The edge network element sends first query information to the central network element based on first storage information →

S504 — ← The central network element generates a second response based on first distillation query information, and sends the second response to the edge network element

S505 ┌ ─ ─ ─ ─ ─ ─ ─ ─ ┐
The edge network element designs a first network model
└ ─ ─ ─ ─ ─ ─ ─ ─ ┘

S506 — The edge network element sends a first category of interest list to the central network element →

S507 — The edge network element sends first configuration information to the central network element →

S508 — The edge network element sends first data information to the central network element →

S509 — ← The central network element performs calculation processing on first sample data based on a first reference network model, filters processed first sample data based on the first category of interest list, to obtain first indication information, and sends the first indication information to the edge network element

S510 ┌ ─ ─ ─ ─ ─ ─ ─ ┐
The edge network element performs distillation training on the first network model by using the first indication information
└ ─ ─ ─ ─ ─ ─ ─ ┘

S511 — The edge network element sends a first training result notification to the central network element →

S512 — ← The central network element releases a channel resource of a distillation training communication connection to the edge network element

FIG. 5

Edge network data analytics function (edge NWDAF) network element

Network repository function (NRF) apparatus

Central network data analytics function (central NWDAF) network element

The central NWDAF sends registration information to the NRF

S601

The edge NWDAF sends a second training request to the network NRF

S602

The NRF generates a third response based on the second training request, and sends the third response to the edge NWDAF

S603

The edge NWDAF sends a distillation notification to the NRF

S604

S605 | The edge NWDAF designs a second network model |

The edge NWDAF sends second configuration information to the central NWDAF

S606

The edge network NWDAF sends second data information to the central NWDAF

S607

The central NWDAF performs calculation processing on second sample data based on a second reference network model, to obtain second indication information, and sends the second indication information to the edge NWDAF

S608

S609 | The edge NWDAF performs distillation training on the second network model by using the second indication information |

The edge network NWDAF sends a first training result notification to the central NWDAF

S610

The central network element releases a channel resource of a distillation training communication connection to the edge network element

S611

FIG. 6

| Edge network data analytics function (edge NWDAF) network element | Network repository function (NRF) apparatus | Central network data analytics function (central NWDAF) network element |
|---|---|---|

The central NWDAF sends registration information to the NRF — S701

S702 — The edge NWDAF sends a second training request to the network NRF

S703 — The NRF generates a third response based on the second training request, and sends the third response to the edge NWDAF

S704 — The edge NWDAF sends a distillation notification to the NRF

S705 — The edge NWDAF designs a second network model

S706 — The edge NWDAF sends a second category of interest list to the central NWDAF

S707 — The edge NWDAF sends second configuration information to the central NWDAF

S708 — The edge network NWDAF sends second data information to the central NWDAF

S709 — The central NWDAF performs calculation processing on second sample data based on a second reference network model, filters processed second sample data based on the second category of interest list, to obtain second indication information, and sends the second indication information to the edge NWDAF

S710 — The edge NWDAF performs distillation training on the second network model by using the second indication information

S711 — The edge network NWDAF sends a first training result notification to the central NWDAF

S712 — The central network element releases a channel resource of a distillation training communication connection to the edge network element

FIG. 7

Network distillation
training apparatus 8

801

First network
model design unit

802

First configuration
information
sending unit

805

First distillation
training unit

803

First data
information
sending unit

804

First indication
information
receiving unit

FIG. 8

Network distillation
training apparatus 9

901

First configuration
information
receiving unit

902

First parameter
configuration unit

903

First data
information
receiving unit

904

First indication
information sending
unit

FIG. 9

Network distillation
training apparatus 10

1001

Registration
information
receiving unit

1003

Third response
sending unit

1002

Second training
request receiving
unit

1004

Distillation
notification
receiving unit

FIG. 10

Network distillation
training apparatus 11

1101

Second training
request sending unit

1102

Third response
receiving unit

1103

Distillation
notification sending
unit

FIG. 11

Network distillation
training apparatus 12

1201

Registration
information
sending unit

1202

Second
configuration
information
receiving unit

1203

Second data
information
receiving unit

1204

Second indication
information
sending unit

FIG. 12

Network distillation
training device 13

1301

Memory

1302

Communication
module

1303

Processor

FIG. 13

Network distillation
training device 14

1401

Memory

1402

Communication
module

1403

Processor

FIG. 14

Network distillation
training device 15

1501

Memory

1502

Communication
module

1503

Processor

## FIG. 15

Network distillation
training device 16

1601

Memory

1602

Communication
module

1603

Processor

## FIG. 16

Network distillation
training device 17

1701

Memory

1702

Communication
module

1703

Processor

## FIG. 17

## INTERNATIONAL SEARCH REPORT

| International application No. |
| --- |
| **PCT/CN2020/129478** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI: 蒸馏, 压缩, 训练, 神经网络, 软目标, 硬目标, 教师, 老师, 学生, 注册, 请求, 响应, 服务器, 客户端, distillation, compress, train, neural network, soft target, hard target, teacher, student, register, request, response, server, client

**C. DOCUMENTS CONSIDERED TO BE RELEVANT**

| Category* | Citation of document, with indication, where appropriate, of the relevant passages | Relevant to claim No. |
| --- | --- | --- |
| X | CN 109711544 A (BEIJING SENSETIME TECHNOLOGY DEVELOPMENT CO., LTD.) 03 May 2019 (2019-05-03) description, paragraphs [0051]-[0124], and figure 4 | 1-2, 5-7, 10, 21-22, 24-25, 27 |
| Y | CN 109711544 A (BEIJING SENSETIME TECHNOLOGY DEVELOPMENT CO., LTD.) 03 May 2019 (2019-05-03) description, paragraphs [0051]-[0124], and figure 4 | 3-4, 8-9, 11-20, 23, 26 |
| Y | CN 111709476 A (INSPUR GROUP CO., LTD.) 25 September 2020 (2020-09-25) description, paragraphs [0037]-[0043] | 3-4, 8-9, 14-15, 18-19 |
| Y | CN 110311900 A (WEIMENG CHUANGKE NETWORK TECHNOLOGY (CHINA) CO., LTD.) 08 October 2019 (2019-10-08) description paragraphs [0065], [0096]-[0113] | 11-20, 23, 26 |
| A | CN 110163236 A (TENCENT TECHNOLOGY SHENZHEN CO., LTD.) 23 August 2019 (2019-08-23) entire document | 1-27 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 July 2021** | **16 August 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/129478**

**C.    DOCUMENTS CONSIDERED TO BE RELEVANT**

| Category* | Citation of document, with indication, where appropriate, of the relevant passages | Relevant to claim No. |
|---|---|---|
| A | US 2018268292 A1 (NEC LABORATORIES AMERICA, INC.) 20 September 2018 (2018-09-20)<br>      entire document | 1-27 |
| A | US 2020134506 A1 (FUJITSU LIMITED) 30 April 2020 (2020-04-30)<br>      entire document | 1-27 |

Form PCT/ISA/210 (second sheet) (January 2015)

## INTERNATIONAL SEARCH REPORT

| International application No. |
| --- |
| **PCT/CN2020/129478** |

**Box No. III    Observations where unity of invention is lacking (Continuation of item 3 of first sheet)**

This International Searching Authority found multiple inventions in this international application, as follows:

[1]    Group 1: claims (1, 6, and 17).

[2]    Group 2: claims (11 and 12).

[3]    The same or similar technical feature between the first group of claims and the second group of claims is merely "the second device sending registration information to the third device", but the above-mentioned technical features are merely customary means in the art, and do not contribute over the prior art.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**    ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

## INTERNATIONAL SEARCH REPORT
### Information on patent family members

International application No.

**PCT/CN2020/129478**

| Patent document cited in search report | | | Publication date (day/month/year) | Patent family member(s) | | | Publication date (day/month/year) |
|---|---|---|---|---|---|---|---|
| CN | 109711544 | A | 03 May 2019 | None | | | |
| CN | 111709476 | A | 25 September 2020 | None | | | |
| CN | 110311900 | A | 08 October 2019 | None | | | |
| CN | 110163236 | A | 23 August 2019 | None | | | |
| US | 2018268292 | A1 | 20 September 2018 | WO | 2018169708 | A1 | 20 September 2018 |
| US | 2020134506 | A1 | 30 April 2020 | EP | 3648014 | A1 | 06 May 2020 |
| | | | | JP | 2020071883 | A | 07 May 2020 |
| | | | | CN | 111105008 | A | 05 May 2020 |

Form PCT/ISA/210 (patent family annex) (January 2015)